# EUROPEAN PATENT APPLICATION

(11) **EP 3 413 605 A1**
(43) Date of publication of application: **12.12.2018**
(21) Application number: 16888731.3
(22) Date of filing: 03.02.2016
(51) Int. Cl.: H04W 12/06

(54) **METHOD AND DEVICE FOR ACQUIRING AND SENDING USER EQUIPMENT IDENTIFIER**

(71) Applicant: Huawei Technologies Co., Ltd., Longgang District Shenzhen, Guangdong 518129 (CN)
(72) Inventor: YU, Youyang, Shenzhen Guangdong 518129 (CN); LI, Huan, Shenzhen Guangdong 518129 (CN)
(74) Representative: Körber, Martin Hans
(86) International application number: PCT/CN2016/073371
(87) International publication number: WO 2017/132906

(57) **Abstract**

A method and device for obtaining a user equipment identifier and a method and device for sending user equipment identifier are provided, and relate to the field of wireless communications technologies, to resolve a problem that a user equipment identifier cannot be obtained after UE accesses a core network from a non-3GPP side. The method for obtaining a user equipment identifier includes: after UE accesses a core network from a non-3GPP side, sending, by a network side device, a user equipment identifier request to the UE; and receiving a user equipment identifier sent by the UE. In embodiments of the present invention, after the UE accesses the core network from the non-3GPP side, a network device can obtain the user equipment identifier of the UE by sending the user equipment identifier request to the UE, and therefore the problem that the user equipment identifier cannot be obtained after the UE accesses the core network by using a gateway device on the non-3GPP side is resolved.

## Description

### TECHNICAL FIELD

The present invention relates to the field of wireless communications technologies, and in particular, to a method and device for obtaining a user equipment identifier, a method and device for sending a user equipment identifier, and a method and device for triggering user equipment identifier detection.

### BACKGROUND

To face a challenge from wireless broadband technologies and keep the leading edge of a 3GPP (3rd Generation Partnership Project, 3rd Generation Partnership Project) network, in 2004, the 3GPP formulated a new mobile communications network architecture, namely, LTE (Long Term Evolution, Long Term Evolution). Because only PS (Packet Switching, packet switched domain) is retained in LTE, LTE may further be referred to as an evolved 3GPP packet switched domain or an EPS (Evolved Packet System, evolved packet system).

An EPC (Evolved Packet Core Network, evolved packet core network) in LTE not only supports a 3GPP access technology, but also supports a non-3GPP access technology such as WIMAX (Worldwide Interoperability for Microwave Access, Worldwide Interoperability for Microwave Access) and a WLAN (Wireless Local Area Network, wireless local area network). For a trusted WLAN, an access gateway on a network side is a TWAN (trusted WLAN access network). For an untrusted WLAN, an access gateway on a network side is an ePDG (Evolved Packet Data Gateway).

When a user terminal accesses the EPC from a 3GPP side, an MME (Mobile Management Entity, mobility management entity) performs EIR (Equipment Identity Register, equipment identity register) detection on a UE (User Equipment, user equipment) identifier based on a configured local policy. The user equipment identifier may be an IMEI (International Mobile Equipment Identity, international mobile equipment identity), an IMEISV (International Mobile Equipment Identity Software Version, international mobile station equipment identity and software version), or the like. After EIR detection is performed on the user equipment identifier, stolen UE may be prevented from accessing a network. For example, when a user loses UE, a user equipment identifier of the UE is added to a blacklist, and after receiving a detection result of the UE from an EIR, the MME disallows the UE to access the network.

However, as non-3GPP networks are widely deployed, UE may access the EPC by using a gateway device on a non-3GPP side. In the prior art, only when the UE accesses the EPC, the gateway device can obtain a user equipment identifier by using a connection establishment message, so that detection can be performed on the user equipment identifier. However, after the UE accesses the EPC by using the gateway device on the non-3GPP side, the user equipment identifier cannot be obtained, and consequently EIR detection cannot be performed on the user equipment identifier after the UE accesses the EPC by using the gateway device on the non-3GPP side.

### SUMMARY

The present invention provides a method and device for obtaining a user equipment identifier, a method and device for sending a user equipment identifier, and a method and device for triggering user equipment identifier detection, to resolve a problem that a user equipment identifier cannot be obtained after UE accesses a core network from a non-3GPP side.

According to a first aspect, a method for obtaining a user equipment identifier is provided, where the method includes:
after user equipment UE accesses a core network from a non-3GPP side, sending, by a network side device, a user equipment identifier request to the UE; and receiving, by the network side device, a user equipment identifier sent by the UE.

On the basis of the first aspect, optionally, before the sending, by a network side device, a user equipment identifier request to the UE, the network side device determines that identifier information of the UE or a service requested by the UE meets a pre-configured local policy.

On the basis of the first aspect, optionally, if the network side device is a gateway device, before the sending, by a network side device, a user equipment identifier request to the UE, the network side device receives the user equipment identifier request sent by a 3GPP AAA server.

On the basis of the first aspect, optionally, the receiving, by the network side device, the user equipment identifier request sent by a 3GPP AAA server includes: receiving, by the network side device, a re-authentication request Re-Auth-Request message sent by the 3GPP AAA server, where the Re-Auth-Request includes an indication of the user equipment identifier request; or
receiving, by the network side device, a user equipment identifier request message sent by the 3GPP AAA server.

On the basis of the first aspect, optionally, if the network side device is a gateway device, the sending, by a network side device, a user equipment identifier request to the UE includes: sending, by the network side device, an Internet Key Exchange information request IKEv2 information request message to the UE, where the IKEv2 information request includes the indication of the user equipment identifier request; and
the receiving, by the network side device, a user equipment identifier sent by the UE includes:
receiving, by the network side device, an Internet Key Exchange information response IKEv2 information response message sent by the UE, where the IKEv2 information response includes the user equipment identifier.

On the basis of the first aspect, optionally, if the network side device is a gateway device, the sending, by a network side device, a user equipment identifier request to the UE includes: sending, by the network side device, a data network modify request PDN modify request message to the UE, where the PDN modify request includes the indication of the user equipment identifier request; and
the receiving, by the network side device, a user equipment identifier sent by the UE includes: receiving, by the network side device, a data network modify response PDN modify accept message sent by the UE, where the PDN modify accept includes the user equipment identifier.

On the basis of the first aspect, optionally, after the network side device receives the user equipment identifier, the network side device sends the user equipment identifier to the 3GPP AAA server.

On the basis of the first aspect, optionally, the sending, by the network side device, the user equipment identifier to the 3GPP AAA server includes: sending, by the network side device, an authentication and authorization request diameter AA request message to the 3GPP AAA server, where the diameter AA request includes the user equipment identifier; or sending, by the network side device, a re-authentication answer Re-Auth-Answer message to the 3GPP AAA server, where the Re-Auth-Answer includes the user equipment identifier; or sending, by the network side device, a user equipment identifier response message to the 3GPP AAA server, where the user equipment identifier response message includes the user equipment identifier.

On the basis of the first aspect, optionally, after the network side device sends the user equipment identifier to the 3GPP AAA server, the method further includes: receiving, by the network side device, a message indicating a failure detection result of the user equipment identifier; and determining, by the network side device based on the message indicating the failure detection result of the user equipment identifier, that the user equipment identifier is unauthorized, and notifying the UE of the failure detection result of the user equipment identifier.

On the basis of the first aspect, optionally, the notifying, by the network side device, the UE of the failure detection result of the user equipment identifier includes: sending, by the network side device, a PDN connection release request PDN disconnection request to the UE, where the PDN disconnection request includes an indication of the failure detection result of the user equipment identifier; or sending, by the network side device, an information request information request message to the UE, where the information request includes an indication of the failure detection result of the user equipment identifier.

On the basis of the first aspect, optionally, the receiving, by the network side device, a message indicating a failure detection result of the user equipment identifier includes:
receiving, by the network side device, an authentication and authorization answer diameter AA answer message, where the diameter AA answer includes the indication of the failure detection result of the user equipment identifier; or receiving, by the network side device, an abort session request abort session request message, where the abort session request includes the indication of the failure detection result of the user equipment identifier.

On the basis of the first aspect, optionally, if the network side device is a 3GPP AAA server, the sending, by a network side device, a user equipment identifier request to the UE includes: sending, by the network side device, an extensible authentication request EAP REQ AKA'Reauthentication message to the UE, where the EAP REQ AKA'Reauthentication includes an indication of the user equipment identifier request; and
the receiving, by the network side device, a user equipment identifier sent by the UE includes: receiving, by the network side device, an extensible authentication response EAP RSP AKA'Reauthentication message sent by the UE, where the EAP RSP AKA'Reauthentication includes the user equipment identifier.

On the basis of the first aspect, optionally, before the sending, by a network side device, a user equipment identifier request to the UE, the method further includes: receiving, by the network side device, a user equipment identifier detection request sent by a gateway device, and determining that detection needs to be performed on the user equipment identifier.

On the basis of the first aspect, optionally, the receiving, by the network side device, the user equipment identifier detection request sent by a gateway device includes: receiving, by the network side device, an authentication request diameter EAP request message sent by the gateway device, where the diameter EAP request includes an indication of the user equipment identifier detection request; or receiving, by the network side device, a user equipment identifier detection request message sent by the gateway device.

On the basis of the first aspect, optionally, after the network side device receives the user equipment identifier, the method further includes: sending, by the network side device, the user equipment identifier to an equipment identity register EIR; and receiving, by the network side device, a detection result that is of the user equipment identifier and that is sent by the EIR, and if determining, based on the detection result of the user equipment identifier, that the user equipment identifier of the UE is unauthorized, notifying the UE or the gateway device of a failure detection result of the user equipment identifier.

On the basis of the first aspect, optionally, the notifying, by the network side device, the UE of a failure detection result of the user equipment identifier includes: sending, by the network side device, an extensible authentication failure EAP failure message to the UE, where the EAP failure includes an indication of the failure detection result of the user equipment identifier.

On the basis of the first aspect, optionally, the notifying, by the network side device, the gateway device of a failure detection result of the user equipment identifier includes: sending, by the network side device, an authentication and authorization answer diameter AA answer message to the gateway device, where the authentication and authorization answer diameter AA answer message includes an indication of the failure detection result of the user equipment identifier; or sending, by the network side device, an abort session request abort session request message to the gateway device, where the abort session request abort session request message includes an indication of the failure detection result of the user equipment identifier.

On the basis of the first aspect, optionally, before the sending, by a network side device, a user equipment identifier request to the UE, the method further includes: receiving, by the network side device by using a home subscriber server HSS, a user equipment identifier detection request sent by an IMS; and
after the receiving, by the network side device, a detection result that is of the user equipment identifier and that is sent by the EIR, the method further includes: sending, by the network side device, the detection result of the user equipment to the IMS by using the HSS.

According to a second aspect, a method for sending a user equipment identifier is provided, where the method includes:
after accessing a core network from a non-3GPP side, receiving, by user equipment UE, a user equipment identifier request sent by a network side device; and sending a user equipment identifier to the network side device.

On the basis of the second aspect, optionally, if the network side device is a gateway device, the receiving, by UE, a user equipment identifier request sent by the network side device includes: receiving, by the UE, an Internet Key Exchange information request IKEv2 information request message sent by the network side device, where the IKEv2 information request includes an indication of the user equipment identifier request; and the sending, by the UE, a user equipment identifier to the network side device includes: sending, by the UE, an Internet Key Exchange information response IKEv2 information response message to the network side device, where the IKEv2 information response includes the user equipment identifier.

On the basis of the second aspect, optionally, if the network side device is a gateway device, the receiving, by UE, the user equipment identifier request sent by the network side device includes: receiving, by the UE, a data network modify request PDN modify request message sent by the network side device, where the PDN modify request includes an indication of the user equipment identifier request; and the sending, by the UE, a user equipment identifier to the network side device includes: sending, by the UE, a data network modify response PDN modify accept to the network side device, where the PDN modify accept includes the user equipment identifier.

On the basis of the second aspect, optionally, if the network side device is a 3GPP AAA server, the receiving, by UE, the user equipment identifier request sent by the network side device includes: receiving, by the UE, an extensible authentication request EAP REQ AKA'Reauthentication message sent by the network side device, where the EAP REQ AKA'Reauthentication includes an indication of the user equipment identifier request; and the sending, by the UE, a user equipment identifier to the network side device includes: sending, by the UE, an extensible authentication response EAP RSP AKA'Reauthentication to the network side device, where the EAP RSP AKA'Reauthentication includes the user equipment identifier.

On the basis of the second aspect, optionally, after the UE accesses the core network and before the UE receives the user equipment identifier request sent by the network side device, the method further includes: sending, by the UE, an IMS service request to an IMS; and after the sending, by the UE, the user equipment identifier to the network side device, the method further includes: receiving, by the UE, a message indicating a failure detection result of the user equipment identifier; and if determining, based on the message indicating the failure detection result of the user equipment identifier, that the user equipment identifier is unauthorized, no longer initiating, by the UE, the IMS service request.

On the basis of the second aspect, optionally, the receiving, by the UE, a message indicating a failure detection result of the user equipment identifier includes: receiving, by the UE, a PDN connection release request PDN disconnection request, where the PDN disconnection request includes an indication of the failure detection result of the user equipment identifier; or receiving, by the UE, an EAP failure, where the EAP failure includes an indication of the failure detection result of the user equipment identifier.

According to a third aspect, a method for triggering user equipment identifier detection is provided, including:
receiving, by an Internet Protocol IP multimedia subsystem IMS, an IMS service request sent by user equipment UE, and determining that detection needs to be performed on a user equipment identifier of the UE; and sending a user equipment identifier detection request to a network side device.

On the basis of the third aspect, optionally, after the sending, by the IMS, a user equipment detection request to the network side device, the method further includes: receiving, by the IMS, a detection result of the user equipment identifier; and determining, by the IMS based on the detection result of the user equipment identifier, whether to accept the IMS service request of the UE; and if determining, based on the detection result of the user equipment identifier, that the detection result of the user equipment identifier is unauthorized, denying the IMS service request of the UE; or if determining, based on the detection result of the user equipment identifier, that the detection result of the user equipment identifier is authorized, accepting the IMS service request of the UE.

According to a fourth aspect, a device for obtaining a user equipment identifier is provided, including:
a transmitter, configured to: after user equipment UE accesses a core network from a non-3GPP side, send a user equipment identifier request to the UE; and a receiver, configured to receive a user equipment identifier sent by the UE.

On the basis of the fourth aspect, optionally, the device further includes a processor, where
the processor is configured to: before the transmitter sends the user equipment identifier request to the UE, determine that identifier information of the UE or a service requested by the UE meets a pre-configured local policy.

On the basis of the fourth aspect, optionally, if the network side device is a gateway device, the receiver is further configured to: before the transmitter sends the user equipment identifier request to the UE, receive the user equipment identifier request sent by a 3GPP AAA server.

On the basis of the fourth aspect, optionally, the receiver is configured to: receive a re-authentication request Re-Auth-Request message sent by the 3GPP AAA server, where the Re-Auth-Request includes an indication of the user equipment identifier request; or receive a user equipment identifier request message sent by the 3GPP AAA server.

On the basis of the fourth aspect, optionally, if the network side device is a gateway device, the transmitter is configured to send an Internet Key Exchange information request IKEv2 information request message to the UE, where the IKEv2 information request includes the indication of the user equipment identifier request; and the receiver is configured to receive an Internet Key Exchange information response IKEv2 information response message sent by the UE, where the IKEv2 information response includes the user equipment identifier.

On the basis of the fourth aspect, optionally, if the network side device is a gateway device, the transmitter is configured to send a data network modify request PDN modify request message to the UE, where the PDN modify request includes the indication of the user equipment identifier request; and the receiver is configured to receive a data network modify response PDN modify accept message sent by the UE, where the PDN modify accept includes the user equipment identifier.

On the basis of the fourth aspect, optionally, the transmitter is further configured to: after the receiver receives the user equipment identifier, send the user equipment identifier to the 3GPP AAA server.

On the basis of the fourth aspect, optionally, the transmitter is configured to: send an authentication and authorization request diameter AA request message to the 3GPP AAA server, where the diameter AA request includes the user equipment identifier; or send, by the network side device, a re-authentication answer Re-Auth-Answer message to the 3GPP AAA server, where the Re-Auth-Answer includes the user equipment identifier; or send a user equipment identifier response message to the 3GPP AAA server, where the user equipment identifier response message includes the user equipment identifier.

On the basis of the fourth aspect, optionally, the receiver is further configured to: after the transmitter sends the user equipment identifier to the 3GPP AAA server, receive a message indicating a failure detection result of the user equipment identifier; and the processor is further configured to: determine, based on the message indicating the failure detection result of the user equipment identifier, that the user equipment identifier is unauthorized, and notify the UE of the failure detection result of the user equipment identifier.

On the basis of the fourth aspect, optionally, the transmitter is configured to: send a PDN connection release request PDN disconnection request to the UE, where the PDN disconnection request includes an indication of the failure detection result of the user equipment identifier; or send an information request information request message to the UE, where the information request includes an indication of the failure detection result of the user equipment identifier.

On the basis of the fourth aspect, optionally, the receiver is configured to: receive an authentication and authorization answer diameter AA answer message, where the diameter AA answer includes the indication of the failure detection result of the user equipment identifier; or receive an abort session request abort session request message, where the abort session request includes the indication of the failure detection result of the user equipment identifier.

On the basis of the fourth aspect, optionally, if the network side device is a 3GPP AAA server, the transmitter is configured to: send an extensible authentication request EAP REQ AKA'Reauthentication message to the UE, where the EAP REQ AKA'Reauthentication includes an indication of the user equipment identifier request; and the receiver is configured to receive an extensible authentication response EAP RSP AKA'Reauthentication message sent by the UE, where the EAP RSP AKA'Reauthentication includes the user equipment identifier.

On the basis of the fourth aspect, optionally, the receiver is configured to: before the transmitter sends the user equipment identifier request to the UE, receive a user equipment identifier detection request sent by a gateway device; and the processor is further configured to determine, based on the user equipment identifier detection request sent by the gateway device, that detection needs to be performed on the user equipment identifier.

On the basis of the fourth aspect, optionally, the receiver is configured to: receive an authentication request diameter EAP request message sent by the gateway device, where the diameter EAP request includes an indication of the user equipment identifier detection request; or receive a user equipment identifier detection request message sent by the gateway device.

On the basis of the fourth aspect, optionally, the transmitter is further configured to: after the receiver receives the user equipment identifier, send the user equipment identifier to an EIR; the processor is further configured to: receive a detection result that is of the user equipment identifier and that is sent by the equipment identity register EIR, and determine, based on the detection result of the user equipment identifier, that the user equipment identifier of the UE is unauthorized; and the transmitter is further configured to notify the UE or the gateway device of a failure detection result of the user equipment identifier.

On the basis of the fourth aspect, optionally, the transmitter is configured to send an extensible authentication failure EAP failure message to the UE, where the EAP failure includes an indication of the failure detection result of the user equipment identifier.

On the basis of the fourth aspect, optionally, the transmitter is configured to: send an authentication and authorization answer diameter AA answer message to the gateway device, where the authentication and authorization answer diameter AA answer message includes an indication of the failure detection result of the user equipment identifier; or send an abort session request abort session request message to the gateway device, where the abort session request abort session request message includes an indication of the failure detection result of the user equipment identifier.

On the basis of the fourth aspect, optionally, the receiver is further configured to: before the transmitter sends the user equipment identifier obtaining request to the UE, receive, by using an HSS, a user equipment identifier detection request sent by an IMS; and the transmitter is further configured to: after the receiver receives the detection result that is of the user equipment identifier and that is sent by the EIR, send the detection result of the user equipment to the IMS by using the HSS.

According to a fifth aspect, a device for sending a user equipment identifier is provided, including:
a receiver, configured to: after the device accesses a core network from a non-3GPP side, receive a user equipment identifier request sent by a network side device; and a transmitter, configured to send a user equipment identifier to the network side device.

On the basis of the fifth aspect, optionally, if the network side device is a gateway device, the receiver is configured to receive an Internet Key Exchange information request IKEv2 information request message sent by the network side device, where the IKEv2 information request includes an indication of the user equipment identifier request; and the transmitter is configured to send an Internet Key Exchange information response IKEv2 information response message to the network side device, where the IKEv2 information response includes the user equipment identifier.

On the basis of the fifth aspect, optionally, if the network side device is a gateway device, the receiver is configured to receive a data network modify request PDN modify request message sent by the network side device, where the PDN modify request includes an indication of the user equipment identifier request; and the transmitter is configured to send a data network modify response PDN modify accept to the network side device, where the PDN modify accept includes the user equipment identifier.

On the basis of the fifth aspect, optionally, if the network side device is a 3GPP AAA server, the receiver is configured to receive an extensible authentication request EAP REQ AKA'Reauthentication message sent by the network side device, where the EAP REQ AKA'Reauthentication includes an indication of the user equipment identifier request; and the transmitter is configured to send an extensible authentication response EAP RSP AKA'Reauthentication to the network side device, where the EAP RSP AKA'Reauthentication includes the user equipment identifier.

On the basis of the fifth aspect, optionally, the transmitter is further configured to: after the UE accesses the core network and before the receiver receives the user equipment identifier obtaining request sent by the network side device, send an IMS service request to an IMS; the receiver is further configured to: after the transmitter sends the user equipment identifier to the network side device, receive a message indicating a failure detection result of the user equipment identifier; and the device further includes a processor, where the processor is configured to: if determining, based on the message indicating the failure detection result of the user equipment identifier, that the user equipment identifier is unauthorized, no longer initiate the IMS service request.

On the basis of the fifth aspect, optionally, the receiver is configured to: receive a PDN connection release request PDN disconnection request, where the PDN disconnection request includes an indication of the failure detection result of the user equipment identifier; or receive an EAP failure, where the EAP failure includes an indication of the failure detection result of the user equipment identifier.

According to a sixth aspect, a device for triggering user equipment identifier detection is provided, including: a receiver, configured to receive an IMS service request sent by user equipment UE; a processor, configured to determine that detection needs to be performed on a user equipment identifier of the UE; and a transmitter, configured to send a user equipment identifier detection request to a network side device.

On the basis of the sixth aspect, optionally, the receiver is further configured to: after the transmitter sends the user equipment detection request to the network side device, receive a detection result of the user equipment identifier; and the processor is further configured to: determine, based on the detection result of the user equipment identifier, whether to accept the IMS service request of the UE; and if determining, based on the detection result of the user equipment identifier, that the detection result of the user equipment identifier is unauthorized, deny the IMS service request of the UE; or if determining, based on the detection result of the user equipment identifier, that the detection result of the user equipment identifier is authorized, accept the IMS service request of the UE.

In the embodiments of the present invention, after the UE accesses the core network from the non-3GPP side, a network device can obtain the user equipment identifier of the UE by sending the user equipment identifier request to the UE, and therefore a problem that the user equipment identifier cannot be obtained after the UE accesses the core network by using a gateway device on the non-3GPP side is resolved:.

### BRIEF DESCRIPTION OF DRAWINGS

FIG. 1 is a schematic diagram of a network architecture applied to an embodiment of the present invention;
FIG. 2A and FIG. 2B are a schematic flowchart of performing EIR detection on a user equipment identifier according to an embodiment of the present invention;
FIG. 3A and FIG. 3B are a schematic flowchart of performing EIR detection on a user equipment identifier according to an embodiment of the present invention;
FIG. 4A, FIG. 4B, and FIG. 4C are a schematic flowchart of performing EIR detection on a user equipment identifier according to an embodiment of the present invention;
FIG. 5A and FIG. 5B are a schematic flowchart of performing EIR detection on a user equipment identifier according to an embodiment of the present invention;
FIG. 6A, FIG. 6B, and FIG. 6C are a schematic flowchart of performing EIR detection on a user equipment identifier according to an embodiment of the present invention;
FIG. 7 is a schematic diagram of a device for obtaining a user equipment identifier according to an embodiment of the present invention;
FIG. 8 is a schematic structural diagram of hardware of a device for obtaining a user equipment identifier according to an embodiment of the present invention;
FIG. 9 is a schematic diagram of a device for sending a user equipment identifier according to an embodiment of the present invention;
FIG. 10 is a schematic structural diagram of hardware of a device for sending a user equipment identifier according to an embodiment of the present invention;
FIG. 11 is a schematic diagram of a device for triggering user equipment identifier detection according to an embodiment of the present invention; and
FIG. 12 is a schematic structural diagram of hardware of a device for triggering user equipment identifier detection according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings in this specification.

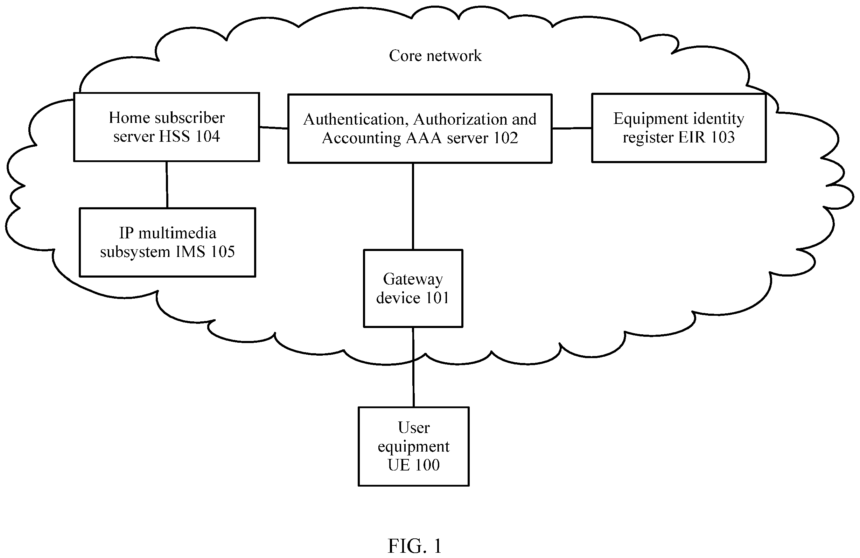

FIG. 1 is a schematic diagram of a network architecture applied to an embodiment of the present invention. The network architecture includes UE 100 and a core network. The core network includes a gateway device 101, an AAA server (Authentication Authorization Accounting Server, Authentication, Authorization and Accounting server) 102, an EIR (Equipment Identity Register, equipment identity register) 103, an HSS (Home SubScriber Server/System, home subscriber server) 104, an IMS (IP Multimedia Subsystem, IP multimedia subsystem), and the like.

It should be noted that, a user equipment identifier in this embodiment includes but is not limited to an IMEI (International Mobile Equipment Identity, international mobile equipment identity) or an IMEISV (International Mobile Equipment Identity Software Version Number, international mobile station equipment identity and software version).

A network side device in this embodiment of the present invention may be a gateway device or an AAA server, and when the network is a non-3GPP network, the AAA server is a 3GPP AAA server.

If the network side device that obtains the user equipment identifier is a gateway device, the gateway device includes but is not limited to a TWAN or an ePDG.

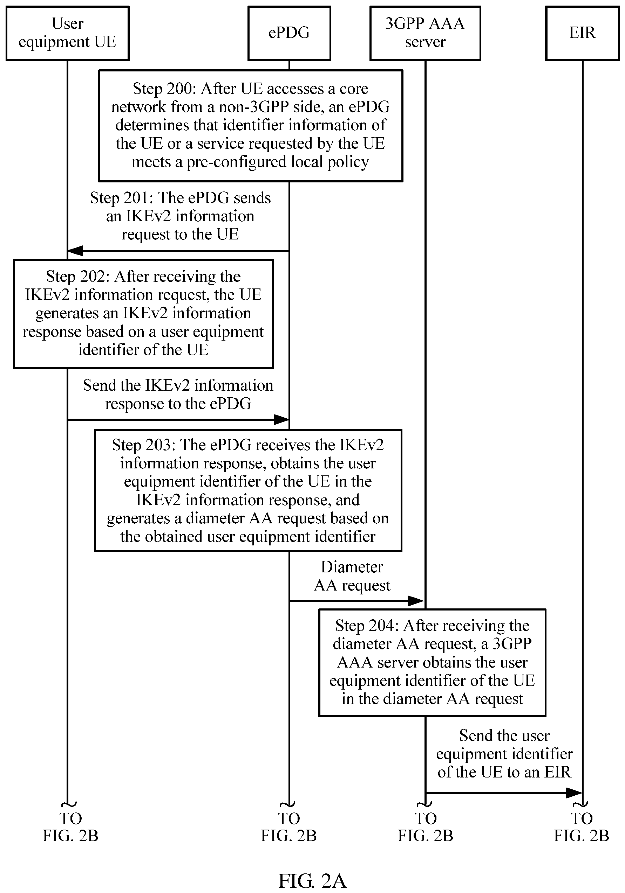

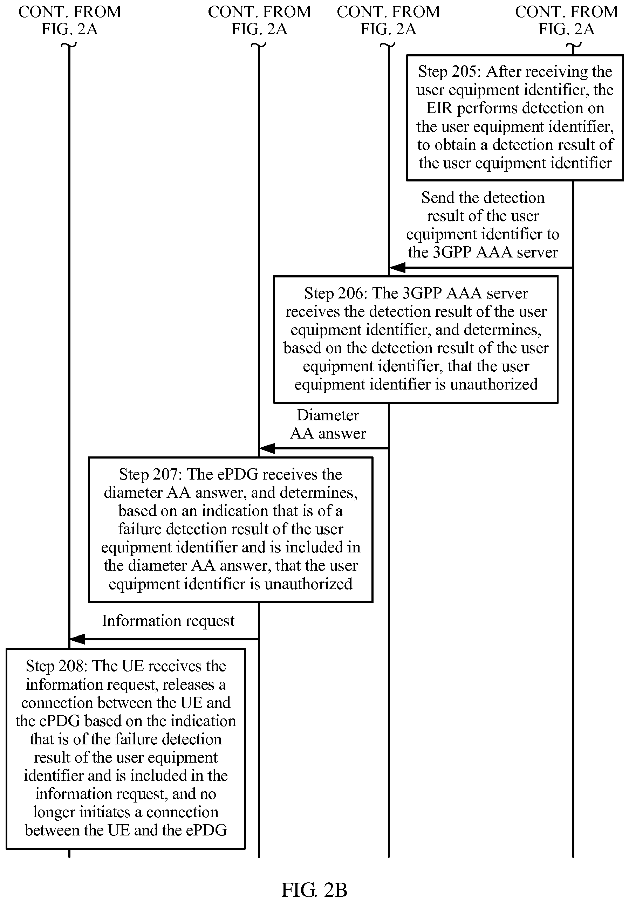

When a network side device is a gateway device and the gateway device triggers user equipment identifier detection, description is provided by using an example in which the gateway device is an ePDG. As shown in FIG. 2A and FIG. 2B, in an embodiment of the present invention, a method for obtaining a user equipment identifier and a method for performing detection on an obtained user equipment identifier include the following steps.

Step 200: After UE accesses a core network from a non-3GPP side, the ePDG determines that identifier information of the UE or a service requested by the UE meets a pre-configured local policy.

It should be noted that, the identifier information of the UE may be an IMSI (International Mobile Subscriber Identity, international mobile subscriber identity) of the UE. For example, if the IMSI of the UE falls within an IMSI range specified in the gateway device, the gateway device determines that EIR detection needs to be performed on user equipment identifiers of UEs corresponding to IMSIs in the range; or if the service requested by the UE meets the local policy configured in the gateway device, the gateway device determines that EIR detection needs to be performed on a user equipment identifier of the UE corresponding to the requested service.

Step 201: The ePDG sends an IKEv2 information request (Internet Key Exchange information request message) to the UE, where the information request includes an indication of a user equipment identifier request.

The IKEv2 information request is an existing message.

The user equipment identifier request is used by the ePDG to obtain the user equipment identifier from the UE.

It should be noted that, the ePDG may send the user equipment identifier request to the UE by using a new self-defined message (such as a user equipment identifier request message).

Alternatively, the ePDG may send the user equipment identifier request to the UE by using another existing message that can carry the indication of the user equipment identifier request.

Step 202: After receiving the IKEv2 information request, the UE generates an IKEv2 information response (Internet Key Exchange information response message) based on a user equipment identifier of the UE, where the IKEv2 information response includes the user equipment identifier, and sends the Internet Key Exchange information response message to the ePDG.

The IKEv2 information response is an existing message.

It should be noted that, the ePDG may directly send a self-defined message to the UE, to send the user equipment identifier request to the UE by using the self-defined message. After receiving the user equipment identifier request, the UE sends, to the ePDG, a response message for the self-defined message, to send the user equipment identifier to the UE by using the response message for the self-defined message.

Step 203: The ePDG receives the IKEv2 information response, obtains the user equipment identifier of the UE in the IKEv2 information response, generates a diameter AA request (Diameter Authentication and Authorization Request, authentication and authorization request message) based on the obtained user equipment identifier, where the diameter AA request includes the user equipment identifier, and sends the diameter AA request to a 3GPP AAA server.

The diameter AA request is an existing message.

It should be noted that, the ePDG may send the user equipment identifier by using a Re-Auth-Answer (re-authentication answer message), and the Re-Auth-Answer is an existing message. Alternatively, the ePDG may send the user equipment identifier by using a self-defined message (such as a user equipment identifier response message).

Step 204: After receiving the diameter AA request, the 3GPP AAA server obtains the user equipment identifier of the UE in the diameter AA request, and sends the user equipment identifier of the UE to an EIR.

Step 205: After receiving the user equipment identifier, the EIR performs detection on the user equipment identifier, to obtain a detection result of the user equipment identifier, and sends the detection result of the user equipment identifier to the 3GPP AAA server.

Step 206: The 3GPP AAA server receives the detection result of the user equipment identifier, and if determining, based on the detection result of the user equipment identifier, that the user equipment identifier is unauthorized, sends a diameter AA answer (authentication and authorization answer message, Diameter Authentication and Authorization Answer) to the ePDG, where the diameter AA answer includes an indication of a failure detection result of the user equipment identifier.

The diameter AA answer is an existing message. In addition, it should be noted that, the 3GPP AAA server may send the result of the failure detection result of the user equipment identifier to the ePDG by using an abort session request (abort session request message), and the abort session request is an existing message. Alternatively, the 3GPP AAA server may send the result of the failure detection result of the user equipment identifier by using a self-defined message.

Step 207: The ePDG receives the diameter AA answer, determines, based on the indication that is of the failure detection result of the user equipment identifier and is included in the diameter AA answer, that the user equipment identifier is unauthorized, and sends an information request (information request message) to the UE, where the information request includes the indication of the failure detection result of the user equipment identifier.

Step 208: The UE receives the information request, releases a connection between the UE and the ePDG based on the indication that is of the failure detection result of the user equipment identifier and is included in the information request, and no longer initiates a connection between the UE and the ePDG.

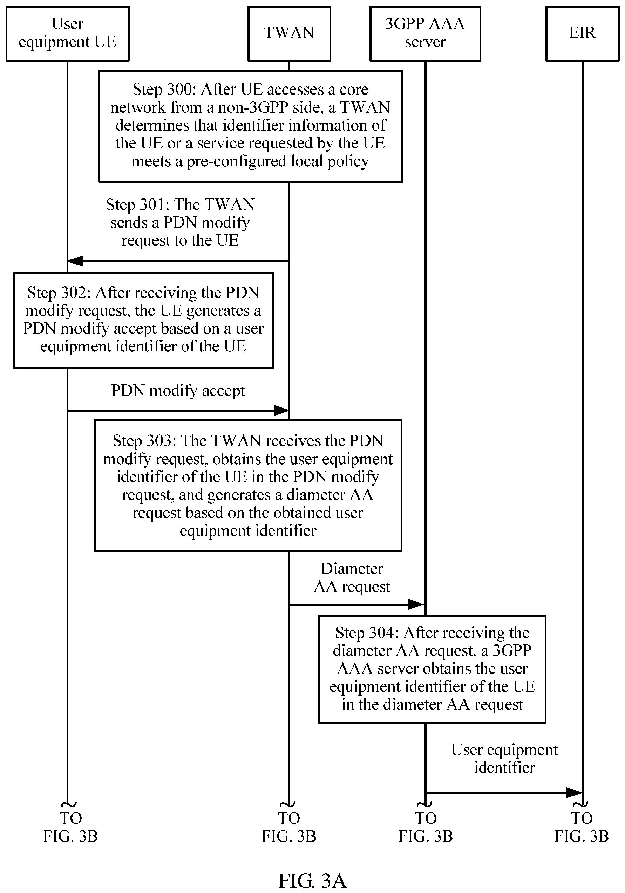

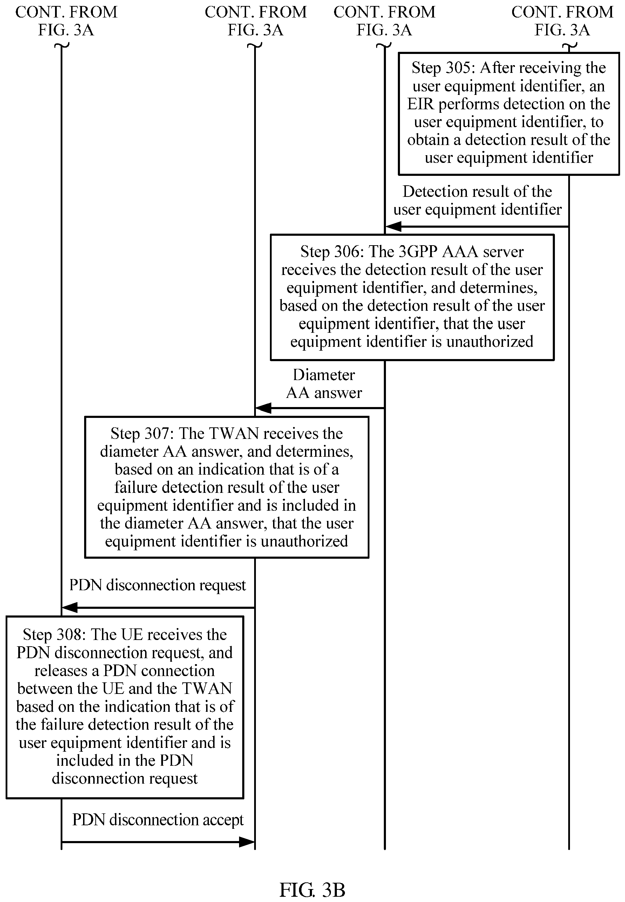

When a network side device that obtains a user equipment identifier is a gateway device and the gateway device triggers user equipment identifier detection, description is provided by using an example in which the gateway device is a TWAN. As shown in FIG. 3A and FIG. 3B, in an embodiment of the present invention, a method for obtaining a user equipment identifier and a method for performing detection on an obtained user equipment identifier include the following steps.

Step 300: After UE accesses a core network from a non-3GPP side, the TWAN determines that identifier information of the UE or a service requested by the UE meets a pre-configured local policy.

It should be noted that, the identifier information of the UE may be an IMSI of the UE. For example, if the IMSI of the UE falls within an IMSI range specified in the gateway device, the gateway device determines that EIR detection needs to be performed on user equipment identifiers of UEs corresponding to IMSIs in the range; or if the service requested by the UE meets the local policy configured in the gateway device, the gateway device determines that EIR detection needs to be performed on a user equipment identifier of the UE corresponding to the requested service.

Step 301: The TWAN sends a PDN modify request (data network modify request message) to the UE, where the PDN modify request includes an indication of a user equipment identifier request.

The PDN modify request is an existing message, and the TWAN may send the user equipment identifier request to the UE by using a new self-defined message.

Alternatively, the TWAN may send the user equipment identifier request to the UE by using another existing message that can carry the indication of the user equipment identifier request.

The user equipment identifier request is used by the ePDG to obtain the user equipment identifier from the UE.

Step 302: After receiving the PDN modify request, the UE generates a PDN modify accept (data network modify response message) based on a user equipment identifier of the UE, where the PDN modify request includes the user equipment identifier, and sends the PDN modify request to the TWAN.

The PDN modify accept is an existing message.

It should be noted that, the TWAN may directly send a self-defined message to the UE, to send the user equipment identifier request to the UE by using the self-defined message. After receiving the user equipment identifier request, the UE sends, to the TWAN, a response message for the self-defined message, to send the user equipment identifier to the UE by using the response message for the self-defined message.

Step 303: The TWAN receives the PDN modify request, obtains the user equipment identifier of the UE in the PDN modify request, generates a diameter AA request (authentication and authorization request message) based on the obtained user equipment identifier, where the diameter AA request includes an indication of the user equipment identifier, and sends the diameter AA request to a 3GPP AAA server.

The diameter AA request is an existing message.

It should be noted that, the TWAN may send the user equipment identifier by using a Re-Auth-Answer, and the Re-Auth-Answer is an existing message. Alternatively, the TWAN may send the user equipment identifier by using a self-defined message (such as a user equipment identifier response message).

Step 304: After receiving the diameter AA request, the 3GPP AAA server obtains the user equipment identifier of the UE in the diameter AA request, and sends the user equipment identifier of the UE to an EIR.

Step 305: After receiving the user equipment identifier, the EIR performs detection on the user equipment identifier, to obtain a detection result of the user equipment identifier, and sends the detection result of the user equipment identifier to the 3GPP AAA server.

Step 306: The 3GPP AAA server receives the detection result of the user equipment identifier, and if determining, based on the detection result of the user equipment identifier, that the user equipment identifier is unauthorized, sends a diameter AA answer to the TWAN, where the diameter AA answer includes an indication of a failure detection result of the user equipment identifier.

The diameter AA answer is an existing message. In addition, it should be noted that, the 3GPP AAA server may send the result of the failure detection result of the user equipment identifier to the TWAN by using an abort session request (abort session request message), and the abort session request is an existing message. Alternatively, the 3GPP AAA server may send the result of the failure detection result of the user equipment identifier by using a new self-defined message.

Alternatively, the 3GPP AAA server may notify the TWAN of the failure detection result of the user equipment identifier by using another existing message that can carry the indication of the failure detection result of the user equipment identifier.

Step 307: The TWAN receives the diameter AA answer, determines, based on the indication that is of the failure detection result of the user equipment identifier and is included in the diameter AA answer, that the user equipment identifier is unauthorized, and sends a PDN disconnection request (PDN connection release request) to the UE, where the PDN disconnection request includes the indication of the failure detection result of the user equipment identifier.

Step 308: The UE receives the PDN disconnection request, releases a connection between the UE and the TWAN based on the indication that is of the failure detection result of the user equipment identifier and is included in the PDN disconnection request, no longer initiates a PDN connection, and sends a PDN disconnection accept (PDN connection release accept message) to the TWAN.

When a 3GPP AAA server triggers user equipment identifier detection, the 3GPP AAA server sends a user equipment identifier request to a gateway device. After the gateway device receives the user equipment identifier request, if the gateway device is an ePDG, step 201 to step 208 are performed; or if the gateway device is a TWAN, step 301 to step 308 are performed.

Specifically, an optional implementation in which a 3GPP AAA server triggers user equipment identifier detection is as follows: When determining that identifier information of UE or a service requested by UE meets a preset condition, the 3GPP AAA server determines that EIR detection needs to be performed on a user equipment identifier.

It should be noted that, the identifier information of the UE may be an IMSI (International Mobile Subscriber Identity, international mobile subscriber identity) of the UE. For example, if the IMSI of the UE falls within an IMSI range specified in the 3GPP AAA server, the gateway device determines that EIR detection needs to be performed on user equipment identifiers of UEs corresponding to IMSIs in the range; or if the service requested by the 3GPP AAA server meets a local policy configured in the gateway device, the 3GPP AAA server determines that EIR detection needs to be performed on the user equipment identifier of the UE corresponding to the requested service.

During implementation, that the 3GPP AAA server sends a user equipment identifier request to a gateway device is specifically as follows: The 3GPP AAA server sends a Re-Auth-Request (re-authentication request message) to the gateway device, where the Re-Auth-Request includes an indication of the user equipment identifier request, or the 3GPP AAA server sends a self-defined user equipment identifier request message to the gateway device.

Alternatively, the 3GPP AAA server may send the user equipment identifier request to the gateway device by using another existing message that can carry an indication of the user equipment identifier request.

After receiving the user equipment identifier request sent by the 3GPP AAA server, the gateway device sends the user equipment identifier request to the UE.

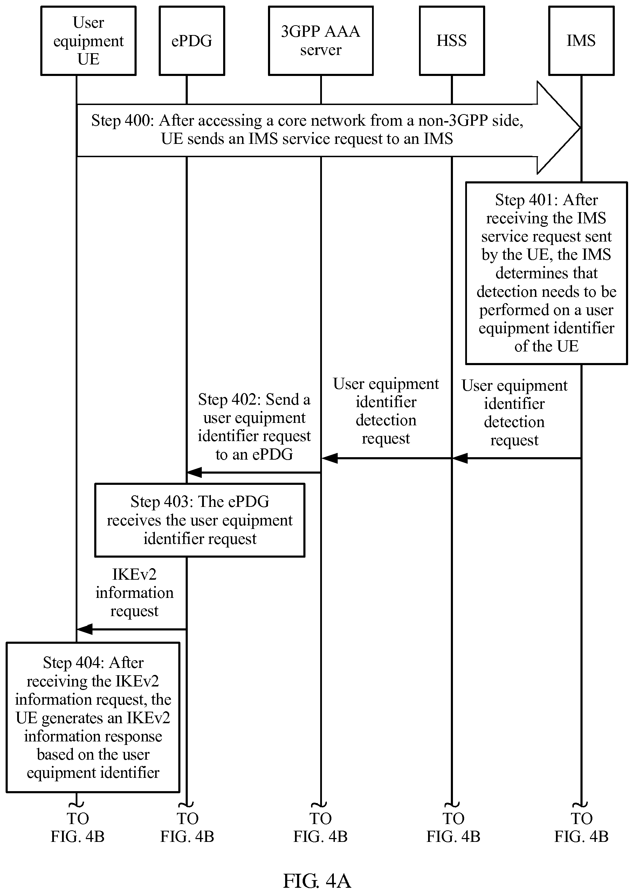

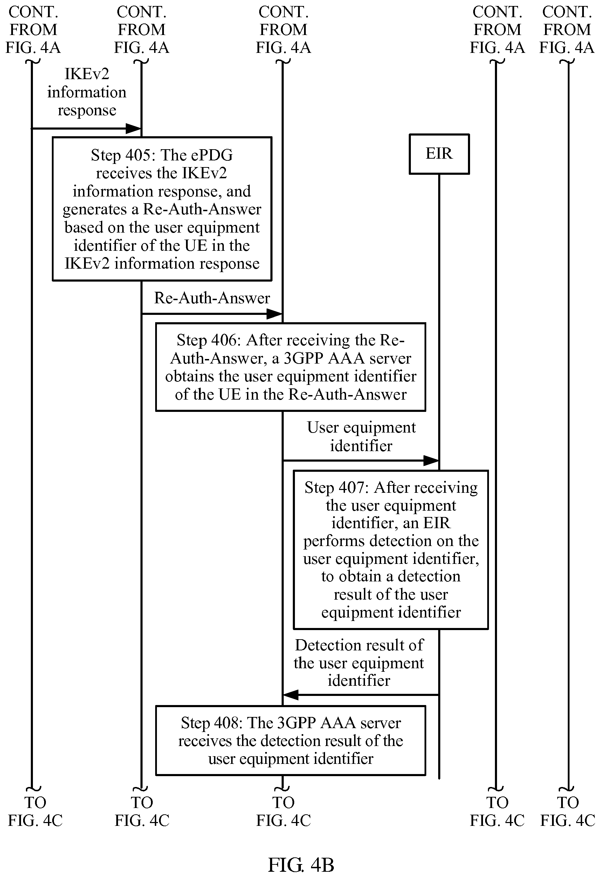

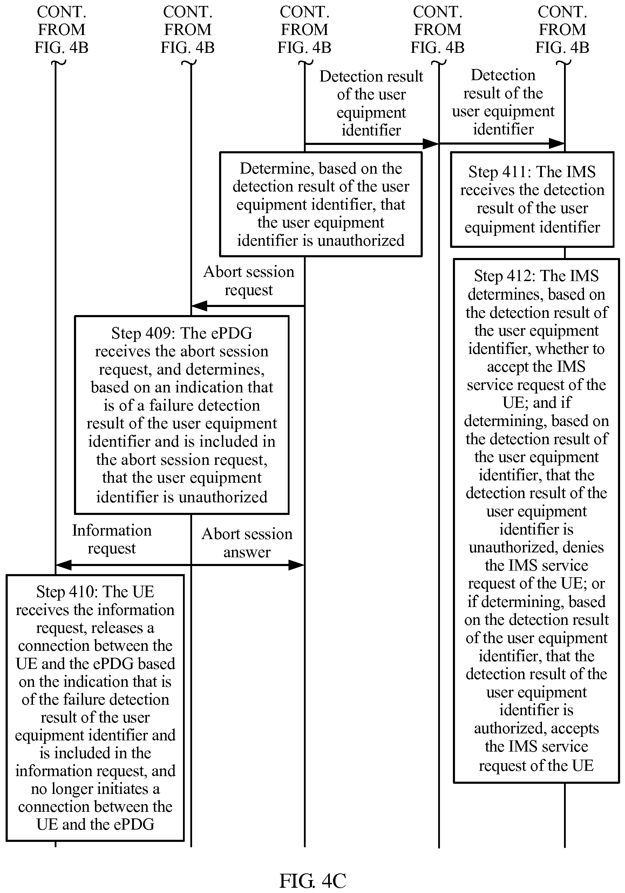

Alternatively, an IMS may trigger EIR detection on a user equipment identifier. Specifically, an example in which a network side device that obtains the user equipment identifier is a gateway device and the gateway device is an ePDG is used. As shown in FIG. 4A, FIG. 4B, and FIG. 4C, through triggering of the IMS, a method for obtaining a user equipment identifier and a method for performing detection on a user equipment identifier include the following steps.

Step 400: After accessing a core network from a non-3GPP side, UE sends an IMS service request to the IMS.

Step 401: After receiving the IMS service request sent by the UE, the IMS determines that detection needs to be performed on a user equipment identifier of the UE, and sends a user equipment identifier detection request to a 3GPP AAA server by using an HSS.

Step 402: After receiving the request for performing EIR detection on the user equipment identifier, the 3GPP AAA server sends a user equipment identifier request to an ePDG.

The 3GPP AAA server may add an indication of the user equipment identifier request into a Re-Auth-Request (re-authentication request message), or may directly send a self-defined user equipment identifier request message to the ePDG, or may send the user equipment identifier detection request to the ePDG by using another existing message that can carry an indication of the user equipment identifier request.

Step 403: After receiving the user equipment identifier request, the ePDG sends an IKEv2 information request (Internet Key Exchange information request message) to the UE, where the IKEv2 information request includes an indication of the user equipment identifier request.

Step 404: After receiving the IKEv2 information request, the UE generates an IKEv2 information response based on the user equipment identifier of the UE, where the IKEv2 information response includes the user equipment identifier, and sends the IKEv2 information response to the ePDG.

It should be noted that, the ePDG may directly send a self-defined message to the UE, to send the user equipment identifier request to the UE by using the self-defined message. After receiving the user equipment identifier request, the UE sends, to the ePDG, a response message for the self-defined message, to send the user equipment identifier to the UE by using the response message for the self-defined message.

Step 405: The ePDG receives the IKEv2 information response, obtains the user equipment identifier of the UE in the IKEv2 information response, generates a Re-Auth-Answer (re-authentication answer message), where the Re-Auth-Answer includes the user equipment identifier, and sends the Re-Auth-Answer to the 3GPP AAA server.

The Re-Auth-Answer is an existing message. It should be noted that, the ePDG may send the user equipment identifier by using an authentication and authorization request diameter AA request message, or may add the user equipment identifier into another existing message that can carry the user equipment identifier.

Alternatively, the ePDG may send the user equipment identifier by using a self-defined message.

Step 406: After receiving the Re-Auth-Answer, the 3GPP AAA server obtains the user equipment identifier of the UE in the Re-Auth-Answer, and sends the user equipment identifier of the UE to an EIR.

Step 407: After receiving the user equipment identifier, the EIR performs detection on the user equipment identifier, to obtain a detection result of the user equipment identifier, and sends the detection result of the user equipment identifier to the 3GPP AAA server.

Step 408: The 3GPP AAA server receives the detection result of the user equipment identifier, sends the detection result of the user equipment identifier to the IMS, and if determining, based on the detection result of the user equipment identifier, that the user equipment identifier is unauthorized, sends an abort session request (abort session request message) to the ePDG, where the abort session request includes an indication of a failure detection result of the user equipment identifier.

It should be noted that, the ePDG may send the indication of the failure detection result of the user equipment identifier by using a diameter AA answer.

Step 409: The ePDG receives the abort session request, determines, based on the indication that is of the failure detection result of the user equipment identifier and is included in the abort session request, that the user equipment identifier is unauthorized, sends an information request to the UE, where the information request includes the indication of the failure detection result of the user equipment identifier, and sends an abort session answer (abort session answer message) to the 3GPP AAA server.

Step 410: The UE receives the information request, releases a connection between the UE and the ePDG based on the indication that is of the failure detection result of the user equipment identifier and is included in the information request, and no longer initiates a connection between the UE and the ePDG.

Step 411: The IMS receives the detection result of the user equipment identifier by using the HSS.

Step 412: The IMS determines, based on the detection result of the user equipment identifier, whether to accept the IMS service request of the UE; and if determining, based on the detection result of the user equipment identifier, that the detection result of the user equipment identifier is unauthorized, denies the IMS service request of the UE; or if determining, based on the detection result of the user equipment identifier, that the detection result of the user equipment identifier is authorized, accepts the IMS service request of the UE.

There is no necessary sequence between steps 409 and 410 and steps 411 and 412, provided that step 409 is before step 410 and step 411 is before step 412.

Alternatively, in step 408, after determining that the user equipment identifier is unauthorized, the 3GPP AAA server may add, into a diameter AA answer, the indication used to indicate the failure detection result of the user equipment identifier, and send the diameter AA answer to the ePDG. If sending a diameter AA answer to the ePDG in step 408, there is no need to perform step 409 of sending an abort session answer to the ePDG.

When the gateway device is a TWAN, a procedure thereof is similar to the foregoing procedure, and details are not described herein. A difference lies in that a message that carries information used to indicate the user equipment identifier or a message that carries information used to indicate the user equipment identifier obtaining request is different from the ePDG. For a different part, refer to steps in FIG. 2A and FIG. 2B and FIG. 3A and FIG. 3B.

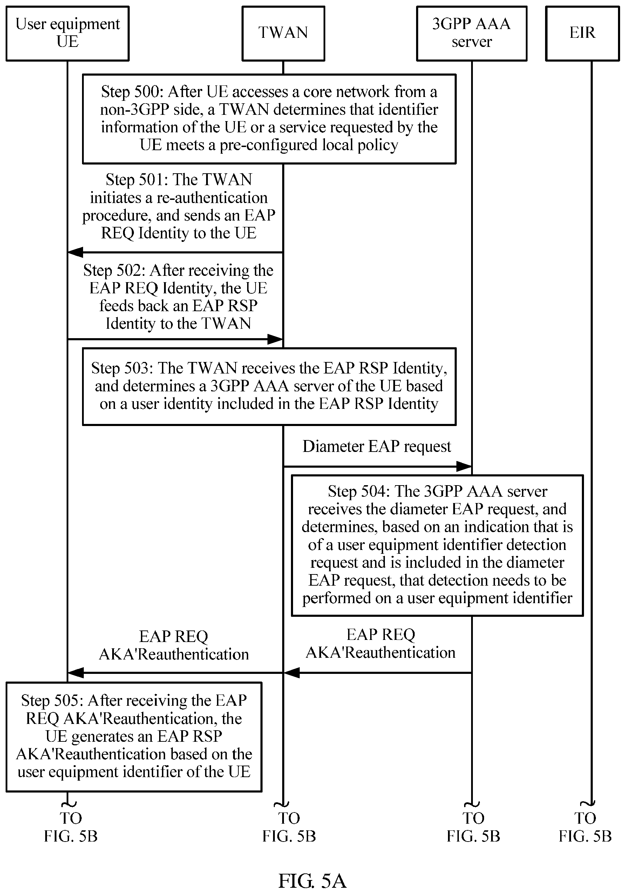

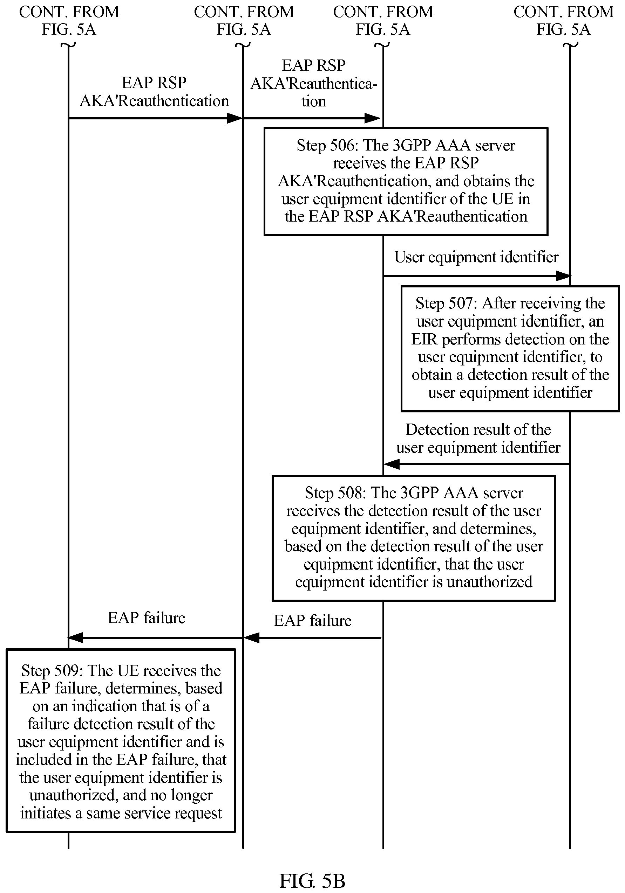

Alternatively, when a network side device that obtains a user equipment identifier is a 3GPP AAA server, an example in which a gateway device is a TWAN is used, and the TWAN may initiate a re-authentication procedure to perform EIR detection. Specifically, when the TWAN triggers EIR detection on the user equipment, as shown in FIG. 5A and FIG. 5B, a method for obtaining a user equipment identifier and a method for performing detection on a user equipment identifier include the following step.

Step 500: After UE accesses a core network from a non-3GPP side, the TWAN determines that identifier information of the UE or a service requested by the UE meets a pre-configured local policy.

It should be noted that, the identifier information of the UE may be an IMSI (International Mobile Subscriber Identity, international mobile subscriber identity) of the UE. For example, if the IMSI of the UE falls within an IMSI range specified in the gateway device, the gateway device determines that EIR detection needs to be performed on user equipment identifiers of UEs corresponding to IMSIs in the range; or if the service requested by the UE meets the local policy configured in the gateway device, the gateway device determines that EIR detection needs to be performed on a user equipment identifier of the UE corresponding to the requested service.

Step 501: The TWAN initiates a re-authentication procedure, and sends an EAP REQ Identity (extensible authentication identity request, Extensible Authentication Protocol Request Identity) to the UE, to request to obtain a user identity.

Step 502: After receiving the EAP REQ Identity, the UE feeds back an EAP RSP Identity (extensible authentication identity response, Extensible Authentication Protocol Response Identity) to the TWAN, where the EAP RSP Identity includes the user identity.

Step 503: The TWAN receives the EAP RSP Identity, determines a 3GPP AAA server of the UE based on the user identity included in the EAP RSP Identity, and sends a diameter EAP request (authentication request message, Diameter Extensible Authentication Protocol Request) to the 3GPP AAA server, where the diameter EAP request includes an indication of a user equipment identifier detection request.

Alternatively, the TWAN may send the user equipment identifier detection request to the 3GPP AAA server by using a self-defined user equipment identifier detection request message.

Step 504: The 3GPP AAA server receives the diameter EAP request, determines, based on the indication that is of the user equipment identifier detection request and is included in the diameter EAP request, that detection needs to be performed on a user equipment identifier, and sends an EAP REQ AKA'Reauthentication (extensible authentication request message) to the UE, where the EAP REQ AKA'Reauthentication includes an indication of a user equipment identifier request.

Specifically, the 3GPP AAA server sends the EAP REQ AKA'Reauthentication to the UE by using the TWAN.

Step 505: After receiving the EAP REQ AKA'Reauthentication, the UE generates an extensible authentication response (EAP RSP AKA'Reauthentication) based on the user equipment identifier of the UE, where the EAP RSP AKA'Reauthentication includes an indication of the user equipment identifier, and sends the EAP RSP AKA'Reauthentication to the 3GPP AAA server.

Specifically, the UE sends the EAP RSP AKA'Reauthentication to the 3GPP AAA server by using the TWAN.

Step 506: The 3GPP AAA server receives the EAP RSP AKA'Reauthentication, obtains the user equipment identifier of the UE in the EAP RSP AKA'Reauthentication, and sends the user equipment identifier of the UE to an EIR.

Step 507: After receiving the user equipment identifier, the EIR performs detection on the user equipment identifier, to obtain a detection result of the user equipment identifier, and sends the detection result of the user equipment identifier to the 3GPP AAA server.

Step 508: The 3GPP AAA server receives the detection result of the user equipment identifier, and if determining, based on the detection result of the user equipment identifier, that the user equipment identifier is unauthorized, sends an EAP failure (extensible authentication failure, Extensible Authentication Protocol failure) to the UE by using the TWAN, where the EAP failure includes an indication of a failure detection result of the user equipment identifier.

Step 509: The UE receives the EAP failure, determines, based on the indication that is of the failure detection result of the user equipment identifier and is included in the EAP failure, that the user equipment identifier is unauthorized, and no longer initiates a same service request.

When a gateway device is a TWAN and a 3GPP AAA server initiates user equipment identifier detection, the 3GPP AAA server sends a user equipment identifier request to the TWAN. After receiving the user equipment identifier request, the TWAN initiates a re-authentication procedure, so that EIR detection is performed on a user equipment identifier, and step 501 to step 509 are performed.

When a network side device that obtains the user equipment identifier is a 3GPP AAA server, an example in which the gateway device is a TWAN is used. That a 3GPP AAA server initiates user equipment identifier detection is specifically as follows: If the 3GPP AAA server determines that identifier information of UE or a service requested by UE meets a pre-configured local policy, the 3GPP AAA server sends a user equipment identifier request to the TWAN.

For example, the identifier information of the UE may be an IMSI (International Mobile Subscriber Identity, international mobile subscriber identity) of the UE. For example, if the IMSI of the UE falls within an IMSI range specified in the 3GPP AAA server, the 3GPP AAA server determines that EIR detection needs to be performed on user equipment identifiers of UEs corresponding to IMSIs in the range; or if the service requested by the UE meets the local policy configured in the 3GPP AAA server, the 3GPP AAA server determines that EIR detection needs to be performed on the user equipment identifier of the UE corresponding to the requested service.

After the 3GPP AAA server sends the user equipment identifier request to the TWAN and the TWAN receives the user equipment identifier request, the TWAN initiates the re-authentication procedure, so that detection is performed on the user equipment identifier, and step 501 to step 509 are performed. Details are not described herein again.

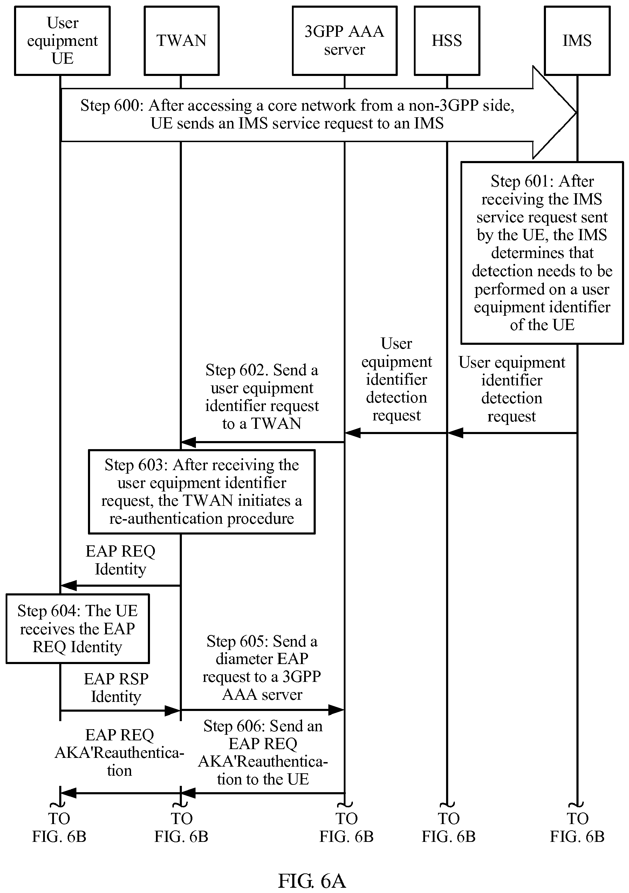

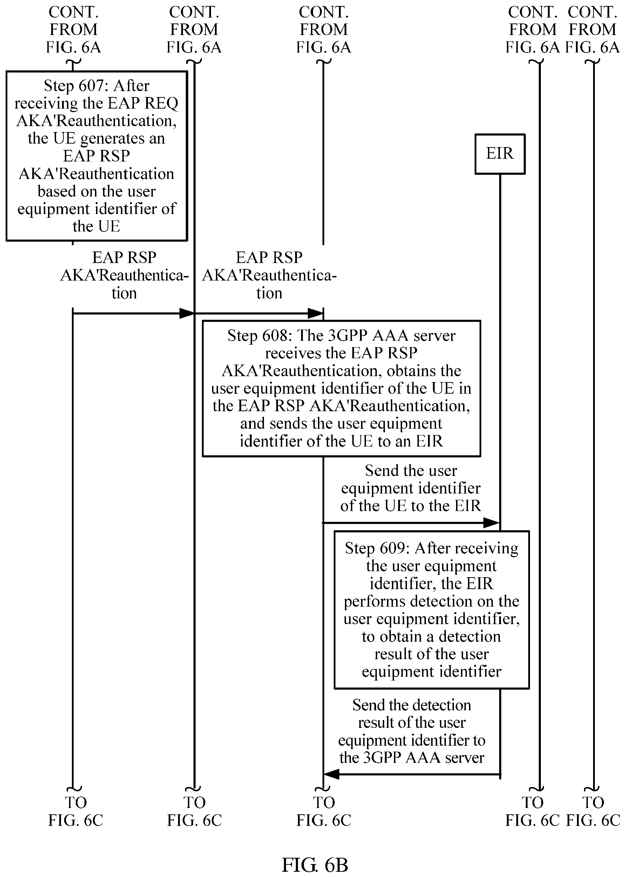

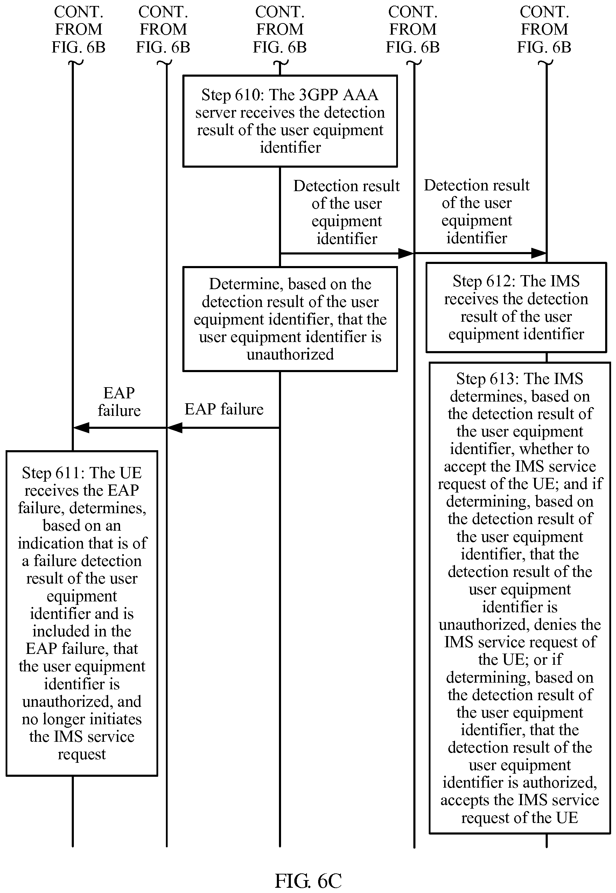

Alternatively, an IMS may trigger EIR detection on a user equipment identifier. Specifically, as shown FIG. 6A, FIG. 6B, and FIG. 6C, through triggering of the IMS, a method for obtaining a user equipment identifier and a method for performing detection on a user equipment identifier include the following steps.

Step 600: After accessing a core network from a non-3GPP side, UE sends an IMS service request to the IMS.

Step 601: After receiving the IMS service request sent by the UE, the IMS determines that detection needs to be performed on a user equipment identifier of the UE, and sends a user equipment identifier detection request to a 3GPP AAA server by using an HSS.

Step 602: After receiving the user equipment identifier detection request, the 3GPP AAA server sends a user equipment identifier request to a TWAN.

The 3GPP AAA server may add an indication of the user equipment identifier request into a Re-Auth-Request (re-authentication request message), or may directly send a self-defined user equipment identifier request message to the TWAN, or may send the user equipment identifier request to the TWAN by using another existing message that can carry an indication of the user equipment identifier request.

Step 603: After receiving the user equipment identifier request, the TWAN initiates a re-authentication procedure, and sends an EAP REQ Identity to the UE.

Step 604: After receiving the EAP REQ Identity, the UE feeds back an EAP RSP Identity to the TWAN.

Step 605: The TWAN receives the EAP RSP Identity, and sends a diameter EAP request to the 3GPP AAA server.

Step 606: After receiving the diameter EAP request, the 3GPP AAA server sends an EAP REQ AKA'Reauthentication to the UE, where the EAP REQ AKA'Reauthentication includes an indication of the user equipment identifier request.

Specifically, the 3GPP AAA server sends the EAP REQ AKA'Reauthentication to the UE by using the TWAN.

Step 607: After receiving the EAP REQ AKA'Reauthentication, the UE generates an EAP RSP AKA'Reauthentication based on the user equipment identifier of the UE, where the EAP RSP AKA'Reauthentication includes an indication of the user equipment identifier, and sends the EAP RSP AKA'Reauthentication to the 3GPP AAA server.

Specifically, the UE sends the EAP RSP AKA'Reauthentication to the 3GPP AAA server by using the TWAN.

Step 608: The 3GPP AAA server receives the EAP RSP AKA'Reauthentication, obtains the user equipment identifier of the UE in the EAP RSP AKA'Reauthentication, and sends the user equipment identifier of the UE to an EIR.

Step 609: After receiving the user equipment identifier, the EIR performs detection on the user equipment identifier, to obtain a detection result of the user equipment identifier, and sends the detection result of the user equipment identifier to the 3GPP AAA server.

Step 610: After receiving the detection result of the user equipment identifier, the 3GPP AAA server sends the detection result of the user equipment identifier to the IMS, and if determining, based on the detection result of the user equipment identifier, that the user equipment identifier is unauthorized, sends an EAP failure to the UE by using the TWAN, where the EAP failure includes an indication of a failure detection result of the user equipment identifier.

Step 611: The UE receives the EAP failure, determines, based on the indication that is of the failure detection result of the user equipment identifier and is included in the EAP failure, that the user equipment identifier is unauthorized, and no longer initiates the IMS service request.

Step 612: The IMS receives the detection result of the user equipment identifier by using the HSS.

Step 613: The IMS determines, based on the detection result of the user equipment identifier, whether to accept the IMS service request of the UE; and if determining, based on the detection result of the user equipment identifier, that the detection result of the user equipment identifier is unauthorized, denies the IMS service request of the UE; or if determining, based on the detection result of the user equipment identifier, that the detection result of the user equipment identifier is authorized, accepts the IMS service request of the UE.

There is no necessary sequence between step 611 and steps 612 and 613, provided that step 612 is before step 613.

In addition, in a scenario in which the UE roams, information is forwarded to the 3GPP AAA server of the UE by using a local 3GPP AAA proxy.

Based on a same invention conception, an embodiment of the present invention further provides a device for obtaining a user equipment identifier. A method corresponding to the device for obtaining a user equipment identifier is the method for obtaining a user equipment identifier in the embodiments of the present invention. Therefore, for implementation of the device for obtaining a user equipment identifier in this embodiment of the present invention, refer to implementation of the method. No repeated description is provided.

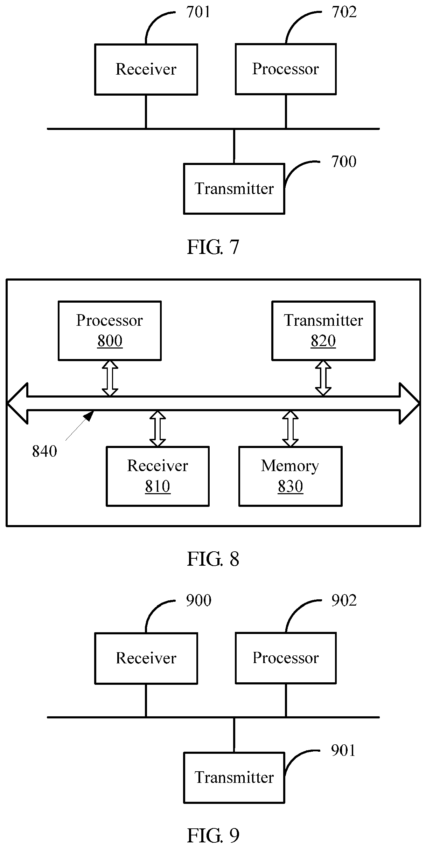

As shown in FIG. 7, the device for obtaining a user equipment identifier in this embodiment of the present invention includes a transmitter 700, a receiver 701, and a processor 702.

The transmitter 700 is configured to: after user equipment UE accesses a core network from a non-3GPP side, send a user equipment identifier request to the UE. The receiver 701 is configured to receive a user equipment identifier sent by the UE.

In a possible implementation, the processor 702 is configured to: before the transmitter 700 sends the user equipment identifier request to the UE, determine that identifier information of the UE or a service requested by the UE meets a pre-configured local policy.

In another possible implementation, when the network side device is a gateway device, the receiver 701 is further configured to: before the transmitter 700 sends the user equipment identifier request to the UE, receive the user equipment identifier request sent by a 3GPP AAA server.

In the foregoing another possible implementation, specifically, the receiver 701 receives a re-authentication request Re-Auth-Request message sent by the 3GPP AAA server, where the Re-Auth-Request includes an indication of the user equipment identifier request; or
the receiver 701 is configured to receive a user equipment identifier request message sent by the 3GPP AAA server.

An optional implementation of sending the user equipment identifier request and a corresponding implementation of receiving the user equipment identifier are as follows: When the network side device is a gateway device, the transmitter 700 is configured to send an Internet Key Exchange information request IKEv2 information request message to the UE, where the IKEv2 information request includes the indication of the user equipment identifier request; and the receiver 701 is configured to receive an Internet Key Exchange information response IKEv2 information response message sent by the UE, where the IKEv2 information response includes the user equipment identifier.

Another optional implementation of sending the user equipment identifier request and a corresponding implementation of receiving the user equipment identifier are as follows: If the network side device is a gateway device, the transmitter 700 is configured to send a data network modify request PDN modify request message to the UE, where the PDN modify request includes the indication of the user equipment identifier request; and the receiver 701 is configured to receive a data network modify response PDN modify accept message sent by the UE, where the PDN modify accept includes the user equipment identifier.

Optionally, the transmitter 700 is further configured to: after the receiver 701 receives the user equipment identifier, send the user equipment identifier to the 3GPP AAA server.

A specific implementation in which the transmitter 700 sends the user equipment identifier to the 3GPP AAA server may be as follows: The transmitter 700 sends an authentication and authorization request diameter AA request message to the 3GPP AAA server, where the diameter AA request includes the user equipment identifier; or
the transmitter 700 sends a re-authentication answer Re-Auth-Answer message to the 3GPP AAA server, where the Re-Auth-Answer includes the user equipment identifier; or
the transmitter 700 sends a user equipment identifier response message to the 3GPP AAA server, where the user equipment identifier response message includes the user equipment identifier.

Optionally, the receiver 701 is further configured to: after the transmitter 700 sends the user equipment identifier to the 3GPP AAA server, receive a message indicating a failure detection result of the user equipment identifier; and
the processor 702 is further configured to: determine, based on the message indicating the failure detection result of the user equipment identifier, that the user equipment identifier is unauthorized, and notify the UE of the failure detection result of the user equipment identifier.

A specific implementation in which the processor 702 determines that the user equipment identifier is unauthorized and notifies the UE of the failure detection result of the user equipment identifier may be as follows: The transmitter 700 sends a PDN connection release request PDN disconnection request to the UE, where the PDN disconnection request includes an indication of the failure detection result of the user equipment identifier; or
the transmitter 700 sends an information request information request message to the UE, where the information request includes an indication of the failure detection result of the user equipment identifier.

A specific implementation in which after the transmitter 700 sends the user equipment identifier to the 3GPP AAA server, the receiver 701 receives the message indicating the failure detection result of the user equipment identifier may be as follows: The receiver 701 receives an authentication and authorization answer diameter AA answer message, where the diameter AA answer includes the indication of the failure detection result of the user equipment identifier; or
the receiver 701 receives an abort session request abort session request message, where the abort session request includes the indication of the failure detection result of the user equipment identifier.

When the network side device is a 3GPP AAA server, another optional implementation of sending the user equipment identifier request and a corresponding implementation of receiving the user equipment identifier are as follows: The transmitter 700 sends an extensible authentication request EAP REQ AKA'Reauthentication message to the UE, where the EAP REQ AKA'Reauthentication includes an indication of the user equipment identifier request; and
the receiver 701 receives an extensible authentication response EAP RSP AKA'Reauthentication message sent by the UE, where the EAP RSP AKA'Reauthentication includes the user equipment identifier.

Optionally, the receiver 701 is configured to: before the transmitter sends the user equipment identifier request to the UE, receive a user equipment identifier detection request sent by a gateway device; and
the processor 702 is further configured to determine, based on the user equipment identifier detection request sent by the gateway device, that detection needs to be performed on the user equipment identifier.

In addition, a specific implementation in which the receiver 701 receives the user equipment identifier detection request sent by the gateway device may be as follows: The receiver 701 receives an authentication request diameter EAP request message sent by the gateway device, where the diameter EAP request includes an indication of the user equipment identifier detection request; or the receiver 701 receives a user equipment identifier detection request message sent by the gateway device.

Optionally, the transmitter 700 is further configured to: after the receiver receives the user equipment identifier, send the user equipment identifier to an EIR;
the processor 702 is further configured to: receive a detection result that is of the user equipment identifier and that is sent by the equipment identity register EIR, and determine, based on the detection result of the user equipment identifier, that the user equipment identifier of the UE is unauthorized; and
the transmitter 700 is further configured to notify the UE or the gateway device of a failure detection result of the user equipment identifier.

A specific implementation in which the transmitter 700 notifies the UE of the failure detection result of the user equipment identifier may be as follows: The transmitter 700 sends an extensible authentication failure EAP failure message to the UE, where the EAP failure includes an indication of the failure detection result of the user equipment identifier.

A specific implementation in which the transmitter 700 notifies the gateway device of the failure detection result of the user equipment identifier may be as follows: The transmitter 700 sends an authentication and authorization answer diameter AA answer message to the gateway device, where the authentication and authorization answer diameter AA answer message includes an indication of the failure detection result of the user equipment identifier; or
the transmitter 700 sends an abort session request abort session request message to the gateway device, where the abort session request abort session request message includes an indication of the failure detection result of the user equipment identifier.

Optionally, the receiver 701 is configured to: before the transmitter 700 sends the user equipment identifier request to the UE, receive, by using an HSS, a user equipment identifier detection request sent by an IMS; and
the transmitter 700 is further configured to: after the receiver 701 receives the detection result that is of the user equipment identifier and that is sent by the EIR, send the detection result of the user equipment to the IMS by using the HSS.

It should be noted that, a hardware structure of a device for obtaining a user equipment identifier in an embodiment of the present invention is shown in FIG. 8, and the device includes a processor 800, a receiver 810, a transmitter 820, and a memory 830. The memory 830 may be configured to store a program/code pre-installed when the device for obtaining a user equipment identifier is delivered from a factory, or may store code or the like that is used by the processor 800 for execution.

The components of the device for obtaining a user equipment identifier are coupled together by using a bus system 840. In addition to a data bus, the bus system 840 further includes a power bus, a control bus, and a status signal bus.

The processor 800 may use a general purpose central processing unit (Central Processing Unit, CPU), a microprocessor, an application-specific integrated circuit (Application Specific Integrated Circuit, ASIC), or one or more integrated circuits, and is configured to execute a related program, to implement the technical solutions provided in this embodiment of the present invention.

The receiver 810 and the transmitter 820 may be integrated into one module, or each of the receiver 810 and the transmitter 820 may exist alone physically, or two or more modules are integrated into one unit. The integrated module may be implemented in a form of hardware, or may be implemented in a form of a software function module.

It should be noted that, although only the processor 800, the receiver 810, the transmitter 820, the memory 830, and the bus system 840 are shown in the device for obtaining a user equipment identifier shown in FIG. 8, in a specific implementation process, persons skilled in the art should understand that, the device further includes another component required for normal running. In addition, persons skilled in the art should understand that, based on a specific requirement, the device may further include a hardware component for implementing another additional function. Further, persons skilled in the art should understand that, the device may include only a component or module required for implementing this embodiment of the present invention, but not necessarily include all the components shown in FIG. 8.

Persons of ordinary skill in the art may understand that, all or some procedures of the methods in the foregoing embodiments may be implemented by a computer program instructing relevant hardware. The program may be stored in a computer readable storage medium. When the program is executed, the procedures of the methods in the embodiments may be included. The foregoing storage medium may be a magnetic disk, an optical disc, a read-only memory (ROM, Read-Only Memory), a random access memory (RAM, Random Access Memory), or the like.

Based on a same invention conception, an embodiment of the present invention further provides a device for sending a user equipment identifier. A method corresponding to the device for sending a user equipment identifier is the method for sending a user equipment identifier in the embodiments of the present invention. Therefore, for implementation of the device for sending a user equipment identifier in this embodiment of the present invention, refer to implementation of the method. No repeated description is provided.

As shown in FIG. 9, the device for sending a user equipment identifier in this embodiment of the present invention includes a receiver 900, a transmitter 901, and a processor 902.

The receiver 900 is configured to: after the device accesses a core network from a non-3GPP side, receive a user equipment identifier request sent by a network side device.

The transmitter 901 is configured to send a user equipment identifier to the network side device.

When the network side device is a gateway device, an optional implementation of receiving the user equipment identifier request sent by the network side device and that of sending the user equipment identifier are as follows: The receiver 900 receives an Internet Key Exchange information request IKEv2 information request message sent by the network side device, where the IKEv2 information request includes an indication of the user equipment identifier request; and
the transmitter 901 sends an Internet Key Exchange information response IKEv2 information response message to the network side device, where the IKEv2 information response includes the user equipment identifier.

When the network side device is a gateway device, another optional implementation of receiving the user equipment identifier request sent by the network side device and that of sending the user equipment identifier are as follows: The receiver 900 receives a data network modify request PDN modify request message sent by the network side device, where the PDN modify request includes an indication of the user equipment identifier request; and
the transmitter 901 sends a data network modify response PDN modify accept to the network side device, where the PDN modify accept includes the user equipment identifier.

When the network side device is a 3GPP AAA server, another optional implementation of receiving the user equipment identifier request sent by the network side device and that of sending the user equipment identifier are as follows: The receiver 900 receives an extensible authentication request EAP REQ AKA'Reauthentication message sent by the network side device, where the EAP REQ AKA'Reauthentication includes an indication of the user equipment identifier request; and
the transmitter 901 sends an extensible authentication response EAP RSP AKA'Reauthentication to the network side device, where the EAP RSP AKA'Reauthentication includes the user equipment identifier.

Optionally, the transmitter 901 is further configured to: after the UE accesses the core network and before the receiver receives the user equipment identifier request sent by the network side device, send an IMS service request to an IMS;
the receiver 900 is further configured to: after the transmitter sends the user equipment identifier to the network side device, receive a message indicating a failure detection result of the user equipment identifier; and
the processor 902 is configured to: if determining, based on the message indicating the failure detection result of the user equipment identifier, that the user equipment identifier is unauthorized, no longer initiate the IMS service request.

A specific implementation in which the receiver 900 receives the message indicating the failure detection result of the user equipment identifier may be as follows: The receiver 900 receives a PDN connection release request PDN disconnection request, where the PDN disconnection request includes an indication of the failure detection result of the user equipment identifier; or
the receiver 900 receives an EAP failure, where the EAP failure includes an indication of the failure detection result of the user equipment identifier.

The receiver 900 is configured to: after the device accesses a core network from a non-3GPP side, receive a user equipment identifier obtaining request sent by a network side device.

The transmitter 901 is configured to send a user equipment identifier to the network side device.

When the network side device is a gateway device, an optional implementation of sending the user equipment identifier request and a corresponding implementation of receiving the user equipment identifier are as follows: The receiver 900 receives an Internet Key Exchange information request IKEv2 information request message sent by the network side device, where the IKEv2 information request includes an indication of the user equipment identifier request; and
the transmitter 901 sends an Internet Key Exchange information response IKEv2 information response message to the network side device, where the IKEv2 information response includes the user equipment identifier.

When the network side device is a gateway device, another optional implementation of sending the user equipment identifier request and a corresponding implementation of receiving the user equipment identifier are as follows: The receiver 900 receives a data network modify request PDN modify request message sent by the network side device, where the PDN modify request includes an indication of the user equipment identifier request; and
the transmitter 901 sends a data network modify response PDN modify accept to the network side device, where the PDN modify accept includes the user equipment identifier.

If the network side device is a 3GPP AAA server, an optional implementation of sending the user equipment identifier request and a corresponding implementation of receiving the user equipment identifier are as follows: The receiver 900 receives an extensible authentication request EAP REQ AKA'Reauthentication message sent by the network side device, where the EAP REQ AKA'Reauthentication includes an indication of the user equipment identifier request; and
the transmitter 901 sends an extensible authentication response EAP RSP AKA'Reauthentication to the network side device, where the EAP RSP AKA'Reauthentication includes the user equipment identifier.

Optionally, the transmitter 901 is further configured to: after the UE accesses the core network and before the receiver receives the user equipment identifier request sent by the network side device, send an IMS service request to an IMS;
the receiver 900 is further configured to: after the transmitter 901 sends the user equipment identifier to the network side device, receive a message indicating a failure detection result of the user equipment identifier; and
the processor 902 is configured to: if determining, based on the message indicating the failure detection result of the user equipment identifier, that the user equipment identifier is unauthorized, no longer initiate the IMS service request.

Optionally, a specific implementation in which the receiver 900 receives the message indicating the failure detection result of the user equipment identifier may be as follows: The receiver 900 receives a PDN connection release request PDN disconnection request, where the PDN disconnection request includes an indication of the failure detection result of the user equipment identifier; or
the receiver 900 receives an EAP failure, where the EAP failure includes an indication of the failure detection result of the user equipment identifier.

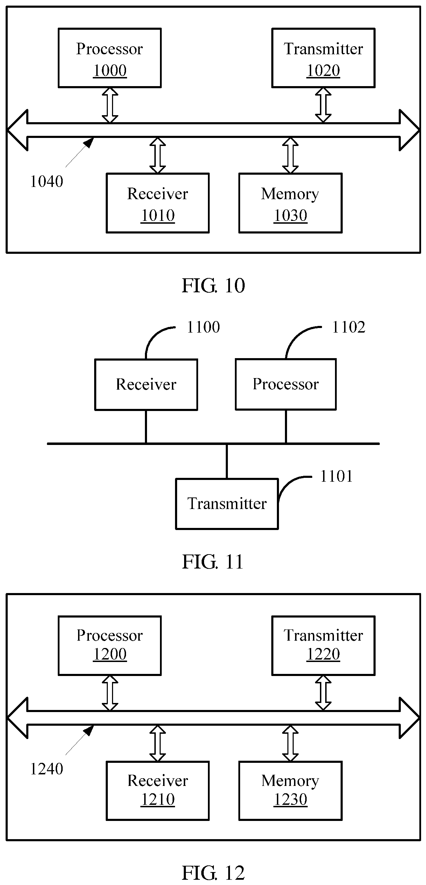

It should be noted that, a hardware structure of a device for sending a user equipment identifier in an embodiment of the present invention is shown in FIG. 10, and the device includes a processor 1000, a receiver 1010, a transmitter 1020, and a memory 1030. The memory 1030 may be configured to store a program/code pre-installed when the device for sending a user equipment identifier is delivered from a factory, or may store code or the like that is used by the processor 1000 for execution.

The components of the device for sending a user equipment identifier are coupled together by using a bus system 1040. In addition to a data bus, the bus system 1040 further includes a power bus, a control bus, and a status signal bus.

The processor 1000 may use a general purpose central processing unit (Central Processing Unit, CPU), a microprocessor, an application-specific integrated circuit (Application Specific Integrated Circuit, ASIC), or one or more integrated circuits, and is configured to execute a related program, to implement the technical solutions provided in this embodiment of the present invention.

The receiver 1010 and the transmitter 1020 may be integrated into one module, or each of the receiver 1010 and the transmitter 1020 may exist alone physically, or two or more modules are integrated into one unit. The integrated module may be implemented in a form of hardware, or may be implemented in a form of a software function module.

It should be noted that, although only the processor 1000, the receiver 1010, the transmitter 1020, the memory 1030, and the bus system 1040 are shown in the device for sending a user equipment identifier shown in FIG. 10, in a specific implementation process, persons skilled in the art should understand that, the device further includes another component required for normal running. In addition, persons skilled in the art should understand that, based on a specific requirement, the device may further include a hardware component for implementing another additional function. Further, persons skilled in the art should understand that, the device may include only a component or module required for implementing this embodiment of the present invention, but not necessarily include all the components shown in FIG. 10.

Persons of ordinary skill in the art may understand that, all or some procedures of the methods in the foregoing embodiments may be implemented by a computer program instructing relevant hardware. The program may be stored in a computer readable storage medium. When the program is executed, the procedures of the methods in the embodiments may be included. The foregoing storage medium may be a magnetic disk, an optical disc, a read-only memory (ROM, Read-Only Memory), a random access memory (RAM, Random Access Memory), or the like.

Based on a same invention conception, an embodiment of the present invention further provides a device for triggering user equipment identifier detection. A method corresponding to the device for triggering user equipment identifier detection is the method for triggering user equipment identifier detection in the embodiments of the present invention. Therefore, for implementation of the device for triggering user equipment identifier detection in this embodiment of the present invention, refer to implementation of the method. No repeated description is provided.

As shown in FIG. 11, the device for triggering user equipment identifier detection in this embodiment of the present invention includes:
a receiver 1100, configured to receive an IMS service request sent by user equipment UE;
a processor 1102, configured to determine that detection needs to be performed on a user equipment identifier of the UE; and
a transmitter 1101, configured to send a user equipment identifier detection request to a network side device.

Optionally, the receiver 1100 is further configured to:
after the transmitter 1101 sends the user equipment detection request to the network side device, receive a detection result of the user equipment identifier; and
the processor 1102 is further configured to: determine, based on the detection result of the user equipment identifier, whether to accept the IMS service request of the UE; and if determining, based on the detection result of the user equipment identifier, that the detection result of the user equipment identifier is unauthorized, deny the IMS service request of the UE; or if determining, based on the detection result of the user equipment identifier, that the detection result of the user equipment identifier is authorized, accept the IMS service request of the UE.

It should be noted that, a hardware structure of a device for triggering user equipment identifier detection in an embodiment of the present invention is shown in FIG. 12, and the device includes a processor 1200, a receiver 1210, a transmitter 1220, and a memory 1230. The memory 1230 may be configured to store a program/code pre-installed when the device for triggering user equipment identifier detection is delivered from a factory, or may store code or the like that is used by the processor 1200 for execution.

The components of the device for triggering user equipment identifier detection are coupled together by using a bus system 1240. In addition to a data bus, the bus system 1240 further includes a power bus, a control bus, and a status signal bus.

The processor 1200 may use a general purpose central processing unit (Central Processing Unit, CPU), a microprocessor, an application-specific integrated circuit (Application Specific Integrated Circuit, ASIC), or one or more integrated circuits, and is configured to execute a related program, to implement the technical solutions provided in this embodiment of the present invention.

The receiver 1210 and the transmitter 1220 may be integrated into one module, or each of the receiver 1210 and the transmitter 1220 may exist alone physically, or two or more modules are integrated into one unit. The integrated module may be implemented in a form of hardware, or may be implemented in a form of a software function module.

It should be noted that, although only the processor 1200, the receiver 1210, the transmitter 1220, the memory 1230, and the bus system 1240 are shown in the device for triggering user equipment identifier detection shown in FIG. 12, in a specific implementation process, persons skilled in the art should understand that, the device further includes another component required for normal running. In addition, persons skilled in the art should understand that, based on a specific requirement, the device may further include a hardware component for implementing another additional function. Further, persons skilled in the art should understand that, the device may include only a component or module required for implementing this embodiment of the present invention, but not necessarily include all the components shown in FIG. 12.

Persons of ordinary skill in the art may understand that, all or some procedures of the methods in the foregoing embodiments may be implemented by a computer program instructing relevant hardware. The program may be stored in a computer readable storage medium. When the program is executed, the procedures of the methods in the embodiments may be included. The foregoing storage medium may be a magnetic disk, an optical disc, a read-only memory (ROM, Read-Only Memory), a random access memory (RAM, Random Access Memory), or the like.

It can be learned from the foregoing content that, after the UE accesses the core network from the non-3GPP side, the network side device sends the user equipment identifier obtaining request to the UE, and the network side device receives the user equipment identifier sent by the UE. In this technical solution, after the UE accesses the core network from the non-3GPP side, a network device can obtain the user equipment identifier of the UE by sending the user equipment identifier obtaining request to the UE, and therefore a problem that the user equipment identifier cannot be obtained after the UE accesses the core network by using a gateway device on the non-3GPP side is resolved.

Persons skilled in the art should understand that, the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a magnetic disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that, computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specified function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A method for obtaining a user equipment identifier, wherein the method comprises:
after user equipment UE accesses a core network from a non-3GPP side, sending, by a network side device, a user equipment identifier request to the UE; and
receiving, by the network side device, a user equipment identifier sent by the UE.

2. The method according to claim 1, wherein before the sending, by a network side device, a user equipment identifier request to the UE, the method further comprises:
determining, by the network side device, that identifier information of the UE or a service requested by the UE meets a pre-configured local policy.

3. The method according to claim 1, wherein if the network side device is a gateway device, before the sending, by a network side device, a user equipment identifier request to the UE, the method further comprises:
receiving, by the network side device, the user equipment identifier request sent by a 3GPP AAA server.

4. The method according to claim 3, wherein the receiving, by the network side device, the user equipment identifier request sent by a 3GPP AAA server comprises:
receiving, by the network side device, a re-authentication request Re-Auth-Request message sent by the 3GPP AAA server, wherein the Re-Auth-Request comprises an indication of the user equipment identifier request; or
receiving, by the network side device, a user equipment identifier request message sent by the 3GPP AAA server.

5. The method according to any one of claims 1 to 4, wherein if the network side device is a gateway device, the sending, by a network side device, a user equipment identifier request to the UE comprises:
sending, by the network side device, an Internet Key Exchange information request IKEv2 information request message to the UE, wherein the IKEv2 information request comprises the indication of the user equipment identifier request; and
the receiving, by the network side device, a user equipment identifier sent by the UE comprises:
receiving, by the network side device, an Internet Key Exchange information response IKEv2 information response message sent by the UE, wherein the IKEv2 information response comprises the user equipment identifier.

6. The method according to any one of claims 1 to 4, wherein if the network side device is a gateway device, the sending, by a network side device, a user equipment identifier request to the UE comprises:
sending, by the network side device, a data network modify request PDN modify request message to the UE, wherein the PDN modify request comprises the indication of the user equipment identifier request; and
the receiving, by the network side device, a user equipment identifier sent by the UE comprises:
receiving, by the network side device, a data network modify response PDN modify accept message sent by the UE, wherein the PDN modify accept comprises the user equipment identifier.

7. The method according to any one of claims 1 to 6, wherein after the network side device receives the user equipment identifier, the method further comprises:
sending, by the network side device, the user equipment identifier to the 3GPP AAA server.

8. The method according to claim 7, wherein the sending, by the network side device, the user equipment identifier to the 3GPP AAA server comprises:
sending, by the network side device, an authentication and authorization request diameter AA request message to the 3GPP AAA server, wherein the diameter AA request comprises the user equipment identifier; or
sending, by the network side device, a re-authentication answer Re-Auth-Answer message to the 3GPP AAA server, wherein the Re-Auth-Answer comprises the user equipment identifier; or
sending, by the network side device, a user equipment identifier response message to the 3GPP AAA server, wherein the user equipment identifier response message comprises the user equipment identifier.

9. The method according to claim 7 or 8, wherein after the network side device sends the user equipment identifier to the 3GPP AAA server, the method further comprises:
receiving, by the network side device, a message indicating a failure detection result of the user equipment identifier; and
determining, by the network side device based on the message indicating the failure detection result of the user equipment identifier, that the user equipment identifier is unauthorized, and notifying the UE of the failure detection result of the user equipment identifier.

10. The method according to claim 9, wherein the notifying, by the network side device, the UE of the failure detection result of the user equipment identifier comprises:
sending, by the network side device, a PDN connection release request PDN disconnection request to the UE, wherein the PDN disconnection request comprises an indication of the failure detection result of the user equipment identifier; or
sending, by the network side device, an information request information request message to the UE, wherein the information request comprises an indication of the failure detection result of the user equipment identifier.

11. The method according to claim 9 or 10, wherein the receiving, by the network side device, a message indicating a failure detection result of the user equipment identifier comprises:
receiving, by the network side device, an authentication and authorization answer diameter AA answer message, wherein the diameter AA answer comprises the indication of the failure detection result of the user equipment identifier; or
receiving, by the network side device, an abort session request abort session request message, wherein the abort session request comprises the indication of the failure detection result of the user equipment identifier.

12. The method according to claim 1 or 2, wherein if the network side device is a 3GPP AAA server, the sending, by a network side device, a user equipment identifier request to the UE comprises:
sending, by the network side device, an extensible authentication request EAP REQ AKA'Reauthentication message to the UE, wherein the EAP REQ AKA'Reauthentication comprises an indication of the user equipment identifier request; and
the receiving, by the network side device, a user equipment identifier sent by the UE comprises:
receiving, by the network side device, an extensible authentication response EAP RSP AKA'Reauthentication message sent by the UE, wherein the EAP RSP AKA'Reauthentication comprises the user equipment identifier.

13. The method according to claim 12, wherein before the sending, by a network side device, a user equipment identifier request to the UE, the method further comprises:
receiving, by the network side device, a user equipment identifier detection request sent by a gateway device, and determining that detection needs to be performed on the user equipment identifier.

14. The method according to claim 13, wherein the receiving, by the network side device, the user equipment identifier detection request sent by a gateway device comprises:
receiving, by the network side device, an authentication request diameter EAP request message sent by the gateway device, wherein the diameter EAP request comprises an indication of the user equipment identifier detection request; or
receiving, by the network side device, a user equipment identifier detection request message sent by the gateway device.

15. The method according to any one of claims 12 to 14, wherein after the network side device receives the user equipment identifier, the method further comprises:
sending, by the network side device, the user equipment identifier to an equipment identity register EIR; and
receiving, by the network side device, a detection result that is of the user equipment identifier and that is sent by the EIR, and if determining, based on the detection result of the user equipment identifier, that the user equipment identifier of the UE is unauthorized, notifying the UE or the gateway device of a failure detection result of the user equipment identifier.

16. The method according to claim 15, wherein the notifying, by the network side device, the UE of a failure detection result of the user equipment identifier comprises:
sending, by the network side device, an extensible authentication failure EAP failure message to the UE, wherein the EAP failure comprises an indication of the failure detection result of the user equipment identifier.

17. The method according to claim 15, wherein the notifying, by the network side device, the gateway device of a failure detection result of the user equipment identifier comprises:
sending, by the network side device, an authentication and authorization answer diameter AA answer message to the gateway device, wherein the authentication and authorization answer diameter AA answer message comprises an indication of the failure detection result of the user equipment identifier; or
sending, by the network side device, an abort session request abort session request message to the gateway device, wherein the abort session request abort session request message comprises an indication of the failure detection result of the user equipment identifier.

18. The method according to any one of claims 12 to 17, wherein before the sending, by a network side device, a user equipment identifier obtaining request to the UE, the method further comprises:
receiving, by the network side device by using a home subscriber server HSS, a user equipment identifier detection request sent by an IMS; and
after the receiving, by the network side device, a detection result that is of the user equipment identifier and that is sent by the EIR, the method further comprises:
sending, by the network side device, the detection result of the user equipment to the IMS by using the HSS.

19. A method for sending a user equipment identifier, wherein the method comprises:
after accessing a core network from a non-3GPP side, receiving, by user equipment UE, a user equipment identifier request sent by a network side device; and
sending, by the UE, a user equipment identifier to the network side device.

20. The method according to claim 19, wherein if the network side device is a gateway device, the receiving, by UE, a user equipment identifier request sent by the network side device comprises:
receiving, by the UE, an Internet Key Exchange information request IKEv2 information request message sent by the network side device, wherein the IKEv2 information request comprises an indication of the user equipment identifier request; and
the sending, by the UE, a user equipment identifier to the network side device comprises:
sending, by the UE, an Internet Key Exchange information response IKEv2 information response message to the network side device, wherein the IKEv2 information response comprises the user equipment identifier.

21. The method according to claim 19, wherein if the network side device is a gateway device, the receiving, by UE, the user equipment identifier request sent by the network side device comprises:
receiving, by the UE, a data network modify request PDN modify request message sent by the network side device, wherein the PDN modify request comprises an indication of the user equipment identifier request; and
the sending, by the UE, a user equipment identifier to the network side device comprises:
sending, by the UE, a data network modify response PDN modify accept to the network side device, wherein the PDN modify accept comprises the user equipment identifier.

22. The method according to claim 19, wherein if the network side device is a 3GPP AAA server, the receiving, by UE, the user equipment identifier request sent by the network side device comprises:
receiving, by the UE, an extensible authentication request EAP REQ AKA'Reauthentication message sent by the network side device, wherein the EAP REQ AKA'Reauthentication comprises an indication of the user equipment identifier request; and
the sending, by the UE, a user equipment identifier to the network side device comprises:
sending, by the UE, an extensible authentication response EAP RSP AKA'Reauthentication to the network side device, wherein the EAP RSP AKA'Reauthentication comprises the user equipment identifier.

23. The method according to any one of claims 19 to 22, wherein after the UE accesses the core network and before the UE receives the user equipment identifier request sent by the network side device, the method further comprises:
sending, by the UE, an IMS service request to an IMS; and
after the sending, by the UE, the user equipment identifier to the network side device, the method further comprises:
receiving, by the UE, a message indicating a failure detection result of the user equipment identifier; and
if determining, based on the message indicating the failure detection result of the user equipment identifier, that the user equipment identifier is unauthorized, no longer initiating, by the UE, the IMS service request.

24. The method according to claim 23, wherein the receiving, by the UE, a message indicating a failure detection result of the user equipment identifier comprises:
receiving, by the UE, a PDN connection release request PDN disconnection request, wherein the PDN disconnection request comprises an indication of the failure detection result of the user equipment identifier; or
receiving, by the UE, an EAP failure, wherein the EAP failure comprises an indication of the failure detection result of the user equipment identifier.

25. A method for triggering user equipment identifier detection, comprising:
receiving, by an Internet Protocol IP multimedia subsystem IMS, an IMS service request sent by user equipment UE, and determining that detection needs to be performed on a user equipment identifier of the UE; and
sending, by the IMS, a user equipment identifier detection request to a network side device.

26. The method according to claim 25, wherein after the sending, by the IMS, a user equipment detection request to the network side device, the method further comprises:
receiving, by the IMS, a detection result of the user equipment identifier; and
determining, by the IMS based on the detection result of the user equipment identifier, whether to accept the IMS service request of the UE; and if determining, based on the detection result of the user equipment identifier, that the detection result of the user equipment identifier is unauthorized, denying the IMS service request of the UE; or if determining, based on the detection result of the user equipment identifier, that the detection result of the user equipment identifier is authorized, accepting the IMS service request of the UE.

27. A device for obtaining a user equipment identifier, comprising:
a transmitter, configured to: after user equipment UE accesses a core network from a non-3GPP side, send a user equipment identifier request to the UE; and
a receiver, configured to receive a user equipment identifier sent by the UE.

28. The device according to claim 27, wherein the device further comprises a processor, wherein
the processor is configured to: before the transmitter sends the user equipment identifier request to the UE, determine that identifier information of the UE or a service requested by the UE meets a pre-configured local policy.

29. The device according to claim 27, wherein if the network side device is a gateway device, the receiver is further configured to:
before the transmitter sends the user equipment identifier request to the UE, receive the user equipment identifier request sent by a 3GPP AAA server.

30. The device according to claim 29, wherein the receiver is configured to:
receive a re-authentication request Re-Auth-Request message sent by the 3GPP AAA server, wherein the Re-Auth-Request comprises an indication of the user equipment identifier request; or
receive a user equipment identifier request message sent by the 3GPP AAA server.

31. The device according to any one of claims 27 to 30, wherein if the network side device is a gateway device, the transmitter is configured to:
send an Internet Key Exchange information request IKEv2 information request message to the UE, wherein the IKEv2 information request comprises the indication of the user equipment identifier request; and
the receiver is configured to:
receive an Internet Key Exchange information response IKEv2 information response message sent by the UE, wherein the IKEv2 information response comprises the user equipment identifier.

32. The device according to any one of claims 27 to 30, wherein if the network side device is a gateway device, the transmitter is configured to:
send a data network modify request PDN modify request message to the UE, wherein the PDN modify request comprises the indication of the user equipment identifier request; and
the receiver is configured to:
receive a data network modify response PDN modify accept message sent by the UE, wherein the PDN modify accept comprises the user equipment identifier.

33. The device according to any one of claims 27 to 32, wherein the transmitter is further configured to:
after the receiver receives the user equipment identifier, send the user equipment identifier to the 3GPP AAA server.

34. The device according to claim 33, wherein the transmitter is configured to:
send an authentication and authorization request diameter AA request message to the 3GPP AAA server, wherein the diameter AA request comprises the user equipment identifier; or
send, by the network side device, a re-authentication answer Re-Auth-Answer message to the 3GPP AAA server, wherein the Re-Auth-Answer comprises the user equipment identifier; or
send a user equipment identifier response message to the 3GPP AAA server, wherein the user equipment identifier response message comprises the user equipment identifier.

35. The device according to claim 33 or 34, wherein the receiver is further configured to:
after the transmitter sends the user equipment identifier to the 3GPP AAA server, receive a message indicating a failure detection result of the user equipment identifier; and
the processor is further configured to:
determine, based on the message indicating the failure detection result of the user equipment identifier, that the user equipment identifier is unauthorized, and notify the UE of the failure detection result of the user equipment identifier.

36. The device according to claim 35, wherein the transmitter is configured to:
send a PDN connection release request PDN disconnection request to the UE, wherein the PDN disconnection request comprises an indication of the failure detection result of the user equipment identifier; or
send an information request information request message to the UE, wherein the information request comprises an indication of the failure detection result of the user equipment identifier.

37. The device according to claim 35 or 36, wherein the receiver is configured to:
receive an authentication and authorization answer diameter AA answer message, wherein the diameter AA answer comprises the indication of the failure detection result of the user equipment identifier; or
receive an abort session request abort session request message, wherein the abort session request comprises the indication of the failure detection result of the user equipment identifier.

38. The device according to claim 27 or 28, wherein if the network side device is a 3GPP AAA server, the transmitter is configured to:
send an extensible authentication request EAP REQ AKA'Reauthentication message to the UE, wherein the EAP REQ AKA'Reauthentication comprises an indication of the user equipment identifier request; and
the receiver is configured to:
receive an extensible authentication response EAP RSP AKA'Reauthentication message sent by the UE, wherein the EAP RSP AKA'Reauthentication comprises the user equipment identifier.

39. The device according to claim 38, wherein the receiver is configured to:
before the transmitter sends the user equipment identifier request to the UE, receive a user equipment identifier detection request sent by a gateway device; and
the processor is further configured to determine, based on the user equipment identifier detection request sent by the gateway device, that detection needs to be performed on the user equipment identifier.

40. The device according to claim 39, wherein the receiver is configured to:
receive an authentication request diameter EAP request message sent by the gateway device, wherein the diameter EAP request comprises an indication of the user equipment identifier detection request; or
receive a user equipment identifier detection request message sent by the gateway device.

41. The device according to any one of claims 38 to 40, wherein the transmitter is further configured to:
after the receiver receives the user equipment identifier, send the user equipment identifier to an EIR;
the processor is further configured to:
receive a detection result that is of the user equipment identifier and that is sent by the equipment identity register EIR, and determine, based on the detection result of the user equipment identifier, that the user equipment identifier of the UE is unauthorized; and
the transmitter is further configured to:
notify the UE or the gateway device of a failure detection result of the user equipment identifier.

42. The device according to claim 41, wherein the transmitter is configured to:
send an extensible authentication failure EAP failure message to the UE, wherein the EAP failure comprises an indication of the failure detection result of the user equipment identifier.

43. The device according to claim 41, wherein the transmitter is configured to:
send an authentication and authorization answer diameter AA answer message to the gateway device, wherein the authentication and authorization answer diameter AA answer message comprises an indication of the failure detection result of the user equipment identifier; or
send an abort session request abort session request message to the gateway device, wherein the abort session request abort session request message comprises an indication of the failure detection result of the user equipment identifier.

44. The device according to any one of claims 38 to 43, wherein the receiver is further configured to:
before the transmitter sends the user equipment identifier obtaining request to the UE, receive, by using an HSS, a user equipment identifier detection request sent by an IMS; and
the transmitter is further configured to:
after the receiver receives the detection result that is of the user equipment identifier and that is sent by the EIR, send the detection result of the user equipment to the IMS by using the HSS.

45. A device for sending a user equipment identifier, comprising:
a receiver, configured to: after the device accesses a core network from a non-3GPP side, receive a user equipment identifier request sent by a network side device; and
a transmitter, configured to send a user equipment identifier to the network side device.

46. The device according to claim 45, wherein if the network side device is a gateway device, the receiver is configured to:
receive an Internet Key Exchange information request IKEv2 information request message sent by the network side device, wherein the IKEv2 information request comprises an indication of the user equipment identifier request; and
the transmitter is configured to:
send an Internet Key Exchange information response IKEv2 information response message to the network side device, wherein the IKEv2 information response comprises the user equipment identifier.

47. The device according to claim 45, wherein if the network side device is a gateway device, the receiver is configured to:
receive a data network modify request PDN modify request message sent by the network side device, wherein the PDN modify request comprises an indication of the user equipment identifier request; and
the transmitter is configured to:
send a data network modify response PDN modify accept to the network side device, wherein the PDN modify accept comprises the user equipment identifier.

48. The device according to claim 46, wherein if the network side device is a 3GPP AAA server, the receiver is configured to:
receive an extensible authentication request EAP REQ AKA'Reauthentication message sent by the network side device, wherein the EAP REQ AKA'Reauthentication comprises an indication of the user equipment identifier request; and
the transmitter is configured to:
send an extensible authentication response EAP RSP AKA'Reauthentication to the network side device, wherein the EAP RSP AKA'Reauthentication comprises the user equipment identifier.

49. The device according to any one of claims 45 to 48, wherein the transmitter is further configured to:
after the UE accesses the core network and before the receiver receives the user equipment identifier obtaining request sent by the network side device, send an IMS service request to an IMS;
the receiver is further configured to: after the transmitter sends the user equipment identifier to the network side device, receive a message indicating a failure detection result of the user equipment identifier; and
the device further comprises a processor, wherein
the processor is configured to: if determining, based on the message indicating the failure detection result of the user equipment identifier, that the user equipment identifier is unauthorized, no longer initiate the IMS service request.

50. The device according to claim 49, wherein the receiver is configured to:
receive a PDN connection release request PDN disconnection request, wherein the PDN disconnection request comprises an indication of the failure detection result of the user equipment identifier; or
receive an EAP failure, wherein the EAP failure comprises an indication of the failure detection result of the user equipment identifier.

51. A device for triggering user equipment identifier detection, comprising:
a receiver, configured to receive an IMS service request sent by user equipment UE;
a processor, configured to determine that detection needs to be performed on a user equipment identifier of the UE; and
a transmitter, configured to send a user equipment identifier detection request to a network side device.

52. The device according to claim 51, wherein the receiver is further configured to:
after the transmitter sends the user equipment detection request to the network side device, receive a detection result of the user equipment identifier; and
the processor is further configured to: determine, based on the detection result of the user equipment identifier, whether to accept the IMS service request of the UE; and if determining, based on the detection result of the user equipment identifier, that the detection result of the user equipment identifier is unauthorized, deny the IMS service request of the UE; or if determining, based on the detection result of the user equipment identifier, that the detection result of the user equipment identifier is authorized, accept the IMS service request of the UE.
